(19) Europäisches Patentamt / European Patent Office / Office européen des brevets

(11) **EP 3 920 001 A1**

(12) **EUROPEAN PATENT APPLICATION**
published in accordance with Art. 153(4) EPC

(43) Date of publication:
**08.12.2021 Bulletin 2021/49**

(51) Int Cl.:
**G05D 1/02** (2020.01)  **G05B 19/4155** (2006.01)
**B25J 9/10** (2006.01)  **B25J 13/00** (2006.01)

(21) Application number: **19914139.1**

(22) Date of filing: **30.01.2019**

(86) International application number:
**PCT/JP2019/003177**

(87) International publication number:
**WO 2020/157862 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NEC Corporation**
**Tokyo 108-8001 (JP)**

(72) Inventors:
• **OYAMA, Hiroyuki**
  **Tokyo 108-8001 (JP)**
• **ITOU, Takehiro**
  **Tokyo 108-8001 (JP)**

(74) Representative: **Betten & Resch**
**Patent- und Rechtsanwälte PartGmbB**
**Maximiliansplatz 14**
**80333 München (DE)**

(54) **OBSTACLE AVOIDANCE CONTROL DEVICE, OBSTACLE AVOIDANCE CONTROL SYSTEM, OBSTACLE AVOIDANCE CONTROL METHOD, AND RECORDING MEDIUM**

(57)     An obstacle avoidance control device includes an avoidance command value calculation unit that obtains an avoidance command value that is a control command value for control target equipment, the control command value which satisfies constraint conditions including a condition sufficient for the control target equipment not to come into contact with an obstacle, and the control command value that an evaluation value obtained by applying the control command value to an evaluation function satisfies a prescribed end condition, and an equipment control unit that controls the control target equipment on the basis of a processing result of the avoidance command value calculation unit.

FIG. 3

**Description**

TECHNICAL FIELD

The present invention relates to an obstacle avoidance control device, an obstacle avoidance control system, an obstacle avoidance control method, and a recording medium.

BACKGROUND ART

Technology for performing control so that control target equipment such as a robot avoids an obstacle has been proposed. For example, in the robot control device described in Patent Document 1, when there is an obstacle between a target position of a tip of an arm of a robot and a first position which is a position before the tip reaches the target position, a convex trajectory for avoiding an obstacle is set. The tip of the arm moves along the above trajectory.

[Prior Art Documents]

[Patent Documents]

[Patent Document 1] Japanese Unexamined Patent Application, First Publication No. 2018-167333

SUMMARY OF THE INVENTION

Problem to be Solved by the Invention

A location where the robot is likely to come into contact with the obstacle is not limited to the tip of the arm thereof. It is preferable that the obstacle be avoided with respect to various parts of the control target equipment as well as the tip of the robot arm.
An example object of the present invention is to provide an obstacle avoidance control device, an obstacle avoidance control system, an obstacle avoidance control method, and a recording medium capable of solving the above-described problems.

Means for Solving the Problem

According to a first example aspect of the present invention, there is provided an obstacle avoidance control device including: an avoidance command value calculation unit that obtains an avoidance command value that is a control command value for control target equipment, the control command value which satisfies constraint conditions including a condition sufficient for the control target equipment not to come into contact with an obstacle, and the control command value that an evaluation value obtained by applying the control command value to an evaluation function satisfies a prescribed end condition; and an equipment control unit that controls the control target equipment on the basis of a processing result of the avoidance command value calculation unit.
According to a second example aspect of the present invention, there is provided an obstacle avoidance control method including: a process of obtaining an avoidance command value that is a control command value for control target equipment, the control command value which satisfies constraint conditions including a condition sufficient for the control target equipment not to come into contact with an obstacle, and the control command value that an evaluation value obtained by applying the control command value to an evaluation function satisfies a prescribed end condition; and a process of controlling the control target equipment on the basis of a processing result in the process of obtaining the avoidance command value.
According to a third example aspect of the present invention, there is provided a recording medium recording a program for causing a computer to execute: a process of obtaining an avoidance command value that is a control command value for control target equipment, the control command value which satisfies constraint conditions including a condition sufficient for the control target equipment not to come into contact with an obstacle, and the control command value that an evaluation value obtained by applying the control command value to an evaluation function satisfies a prescribed end condition; and a process of controlling the control target equipment on the basis of a processing result in the process of obtaining the avoidance command value.

Effect of the Invention

According to the obstacle avoidance control device, the obstacle avoidance control system, the obstacle avoidance control method, and the recording medium described above, it is possible to perform control so that an obstacle is avoided with respect to various parts of the control target equipment.

BRIEF DESCRIPTION OF THE DRAWINGS

FIG. 1 is a schematic configuration diagram showing an example of a device configuration of an obstacle avoidance control system according to a first example embodiment.

FIG. 2 is a schematic block diagram showing an example of a functional configuration of an information acquisition device according to the first example embodiment.

FIG. 3 is a schematic block diagram showing an example of a functional configuration of an obstacle avoidance control device according to the first example embodiment.

FIG. 4 is a diagram showing an example of a flow of data in the obstacle avoidance control system according to the first example embodiment.

FIG. 5 is a flowchart showing an example of a processing procedure in which the obstacle avoidance control device according to the first example embodiment acquires a control command value for control target equipment.

FIG. 6 is a flowchart showing an example of a processing procedure in which the obstacle avoidance control device according to the first example embodiment calculates a value associated with an interference function.

FIG. 7 is a flowchart showing an example of a processing procedure in which the obstacle avoidance control device according to the first example embodiment calculates a differential value $\Delta B(x, u)$ of an interference function value.

FIG. 8 is a schematic configuration diagram showing an example of a device configuration of an obstacle avoidance control system according to a second example embodiment.

FIG. 9 is a schematic block diagram showing an example of a functional configuration of an obstacle position estimation device according to the second example embodiment.

FIG. 10 is a diagram showing an example of a flow of data in an obstacle avoidance control system according to the second example embodiment.

FIG. 11 is a schematic configuration diagram showing an example of a device configuration of an obstacle avoidance control system according to a third example embodiment.

FIG. 12 is a schematic block diagram showing an example of a functional configuration of an obstacle operation prediction device according to the third example embodiment.

FIG. 13 is a diagram showing an example of a flow of data in the obstacle avoidance control system according to the third example embodiment.

FIG. 14 is a schematic configuration diagram showing an example of a device configuration of an obstacle avoidance control system according to a fourth example embodiment.

FIG. 15 is a schematic block diagram showing an example of a functional configuration of an obstacle avoidance control device according to the fourth example embodiment.

FIG. 16 is a diagram showing an example of a flow of data in the obstacle avoidance control system according to the fourth example embodiment.

FIG. 17 is a flowchart showing an example of a processing procedure in which the obstacle avoidance control device according to the fourth example embodiment acquires a control command value for control target equipment.

FIG. 18 is a diagram showing an example of a configuration of an obstacle avoidance control device according to a fifth example embodiment.

FIG. 19 is a diagram showing an example of a processing procedure in an obstacle avoidance control method according to a sixth example embodiment.

FIG. 20 is a schematic block diagram showing a configuration of a computer according to at least one example embodiment.

EXAMPLE EMBODIMENT

Hereinafter, example embodiments of the present invention will be described. The example embodiments to be described below do not limit the inventions set forth in the appended claims. Also, not all of combinations of features described in the example embodiments may be essential for solving means of the inventions.

<First example embodiment>

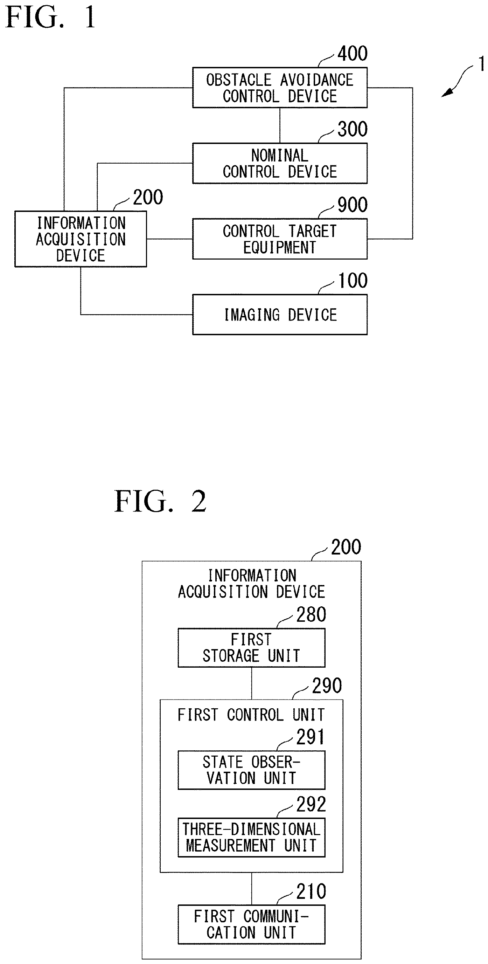

FIG. 1 is a schematic configuration diagram showing an example of a device configuration of an obstacle avoidance control system according to a first example embodiment. In the configuration shown in FIG. 1, the obstacle avoidance control system 1 includes an imaging device 100, an information acquisition device 200, a nominal control device 300, and an obstacle avoidance control device 400.

The obstacle avoidance control system 1 controls control target equipment 900. The obstacle avoidance control system 1 controls the control target equipment 900 so that the control target equipment 900 performs a desired operation and the control target equipment 900 does not come into contact with an obstacle.

The desired operation described here is an operation for achieving a target set in the control target equipment 900. The contact described here is not limited to a simple touch and includes a collision. When the control target equipment 900 comes into contact with an obstacle, at least a part of the control target equipment 900 may come into contact with at least a part of the obstacle.

Although a case in which the control target equipment 900 is a vertical articulated robot will be described below as an example, a control target of the obstacle avoidance control system 1 operates in accordance with a control command value and can be various types of equipment that are likely to come into contact with an obstacle. For example, the control target equipment 900 may be an industrial robot other than a vertical articulated robot.

Alternatively, the control target equipment 900 may be a robot other than an industrial robot, such as a building robot or a domestic robot. Various robots that are not limited to a specific application and that change in shape can be used as an example of the control target equipment 900.

Alternatively, the control target equipment 900 may be moving objects such as automated guided vehicles or drones. Also, the control target equipment 900 may be a device that operates autonomously as long as it can be controlled by a control command value.

The obstacle described here is an obstacle that is likely to come into contact with the control target equipment 900. The obstacle is not limited to any specific type of obstacle. For example, the obstacle may be a human being, another robot, a nearby wall or machine, temporarily placed cargo, or a combination thereof.

Also, the control target equipment 900 itself may be treated as an obstacle. For example, when the control target equipment 900 is a vertical articulated robot and a robot arm and a pedestal portion come into contact with each other according to a posture thereof, the obstacle avoidance control system 1 treats the control target equipment 900 as the obstacle, so that contact between the robot arm and the pedestal portion can be avoided.

The imaging device 100 captures an image of an obstacle. For example, the imaging device 100 captures an image so that the entire space where the control target equipment 900 can operate is included within an imaging range, and the imaging device 100 captures an image of the obstacle when the obstacle is present.

The information acquisition device 200 estimates a position of the obstacle on the basis of the image captured by the imaging device 100. As the imaging device 100, a camera capable of obtaining three-dimensional information, such as a depth camera or a stereo camera, may be used. Alternatively, the information acquisition device 200 may be configured to use technology for obtaining three-dimensional information from a two-dimensional image, such as a three-dimensional extension of OpenPose.

Alternatively, the obstacle avoidance control system 1 may be configured to include a device for obtaining three-dimensional information such as a three-dimensional light detection and ranging (3D-LiDAR) sensor in addition to or instead of the imaging device 100.

Also, the imaging device 100 may include multiple cameras. The imaging device 100 may be movable.

The imaging device 100 may be configured to indicate a state of a space of an observation target with voxel data.

The information acquisition device 200 acquires sensing data from a sensor that observes the control target equipment 900, such as a sensor provided in the control target equipment 900, and detects a position and an operation of the control target equipment 900. The sensor from which the information acquisition device 200 acquires sensing data is not limited to a specific type of sensor. For example, the information acquisition device 200 may be configured to acquire information about any one of a joint angle, a joint angular velocity, a joint velocity, and joint acceleration, or a combination thereof associated with each joint of the control target equipment 900 from the sensing data.

The information acquisition device 200 generates and transmits position information of the control target equipment 900 and information indicating a movement of the control target equipment 900 on the basis of the obtained information.

The information acquisition device 200 may be configured to transmit the position information of the control target equipment 900 with voxel data. For example, when the information acquisition device 200 transmits position information of a surface of the control target equipment 900 with voxel data, the obstacle avoidance control device 400 can ascertain a positional relationship between the surface of the control target equipment 900 instead of one point and the obstacle and more accurately ascertain a distance between the control target equipment 900 and the obstacle. The distance between the control target equipment 900 and the obstacle can be more accurately ascertained, so that the obstacle avoidance control device 400 can perform control for causing the control target equipment 900 to avoid the obstacle with higher accuracy. Alternatively, the information acquisition device 200 may be configured to transmit coordinates of a representative point set in the control target equipment 900 as the position information of the control target equipment 900.

The information acquisition device 200 transmits, for example, a velocity, acceleration, an angular velocity, angular acceleration, or a combination thereof associated with the control target equipment 900, as information indicating the movement of the control target equipment 900. The information acquisition device 200 may be configured to transmit information indicating the movement of the surface of the control target equipment 900 with voxel data. Alternatively, the information acquisition device 200 may be configured to transmit data indicating the movement of the representative point of the control target equipment 900. For example, the information acquisition device 200 may be configured to transmit a vector in which generalized coordinates q and a generalized velocity q' of the control target equipment 900 are arranged.

Alternatively, the information acquisition device 200 may be configured to transmit information indicating a movement of an actuator of the control target equipment, such as the angular velocity of the joint of the control target equipment.

The position information of the control target equipment 900 and the information indicating the movement of the control target equipment 900 are collectively referred to as state information of the control target equipment 900.

The information acquisition device 200 transmits the state information of the control target equipment to the nominal control device 300 and the obstacle avoidance control device 400.

The information acquisition device 200 transmits the position information of the obstacle. The information acquisition device 200 may be configured to transmit the position information of the obstacle in a data format of voxel data. For example, when the information acquisition device 200 transmits the position information of the surface of the obstacle with voxel data, the obstacle avoidance control device 400 can ascertain the positional relationship between the surface of the obstacle instead of one point and the control target equipment 900 and more accurately ascertain the distance between the control target equipment 900 and the obstacle. The distance between the control target equipment 900 and the obstacle can be more accurately ascertained, so that the obstacle avoidance control device 400 can perform control for causing the control target equipment 900 to avoid the obstacle with higher accuracy. Alternatively, the information acquisition device 200 may be configured to transmit the coordinates of the representative point set in the control target equipment 900 as the position information of the control target equipment 900.

When the obstacle moves, the information acquisition device 200 may be configured to transmit information indicating the movement of the obstacle in addition to the position information of the obstacle. The information acquisition device 200 may be configured to transmit, for example, a velocity, acceleration, an angular velocity, angular acceleration, or a combination thereof associated with the obstacle, as information indicating the movement of the obstacle. The information acquisition device 200 may be configured to transmit information indicating the movement of the surface of the obstacle with voxel data. Alternatively, the information acquisition device 200 may be configured to transmit data indicating a movement of a representative point of the obstacle. For example, the information acquisition device 200 may be configured to transmit a vector in which generalized coordinates q and a generalized velocity q' of the obstacle are arranged.

The position information of the obstacle or the combination of the position information of the obstacle and the information indicating the movement of the obstacle when the obstacle moves is referred to as the state information of the obstacle.

The information acquisition device 200 transmits the state information of the obstacle to the obstacle avoidance control device 400.

The nominal control device 300 calculates a nominal command value. The nominal command value is a control command value for the control target equipment 900 when obstacle avoidance by the control target equipment 900 is not taken into account. That is, the nominal command value is a control command value for the control target equipment 900 to achieve a target set in the control target equipment 900 under the assumption that there is no obstacle.

A control method for the nominal control device 300 to calculate the nominal command value is not limited to a specific control method and various known control methods can be used.

The nominal command value calculated by the nominal control device 300 is used as a control command value serving as a reference for the obstacle avoidance control device 400 to acquire the control command value (i.e., a control command value that is actually used) indicated with respect to the control target equipment 900.

The obstacle avoidance control device 400 executes the control of the control target equipment 900 by the obstacle avoidance control system 1. Therefore, as described above with respect to the obstacle avoidance control system 1, the obstacle avoidance control device 400 causes the control target equipment 900 to perform a desired operation and controls the control target equipment 900 so that the control target equipment 900 does not come into contact with the obstacle.

The obstacle avoidance control device 400 acquires a control command value for controlling the control target equipment 900. The obstacle avoidance control device 400 controls the control target equipment 900 by transmitting the acquired control command value to the control target equipment 900.

When the distance between the control target equipment 900 and the obstacle is greater than a prescribed threshold value, the obstacle avoidance control device 400 uses the control command value calculated by the nominal control device 300 as the control command value for the control target equipment 900. This is because it can be expected that the control target equipment 900 will not come into contact with the obstacle even if the control command value calculated by the nominal control device 300 without taking into account the obstacle avoidance is used. By using a control threshold value calculated by the nominal control device 300, the obstacle avoidance control device 400 does not need to newly calculate a control threshold value in consideration of the obstacle avoidance. In this regard, the load of the obstacle avoidance control device 400 can be lightened.

On the other hand, when the distance between the control target equipment 900 and the obstacle is less than the prescribed threshold value, there is a relatively high possibility that the control target equipment 900 will come into contact with an obstacle according to the control command value calculated by the nominal control device 300. Therefore, the obstacle avoidance control device 400 calculates a control command value for the control target equipment 900 to avoid the obstacle and achieve the target and transmits the calculated control command value to the control target equipment 900.

FIG. 2 is a schematic block diagram showing an example of a functional configuration of the information acquisition device 200. In the configuration shown in FIG. 2, the information acquisition device 200 includes a first communication unit 210, a first storage unit 280, and a first control unit 290. The first control unit 290 includes a state observation unit 291 and a three-dimensional measurement unit 292.

The first communication unit 210 communicates with other devices. In particular, the first communication unit 210 receives sensing data from the sensor provided in the control target equipment 900. Also, the first communication unit 210 receives data from the imaging device 100. The first communication unit 210 receives image data of an image captured by the imaging device 100 and further receives the additional information in addition to the image data when there is additional information such as distance information in a depth direction.

Also, the first communication unit 210 transmits position information and operation information of the control target equipment 900 generated by the information acquisition device 200 to the nominal control device 300 and the obstacle avoidance control device 400. Also, the first communication unit 210 transmits the position information of the obstacle generated by the information acquisition device 200 to the obstacle avoidance control device 400. When the information acquisition device 200 also identifies an operation of the obstacle, the first communication unit 210 transmits operation information of the obstacle (for example, velocity or acceleration information) to the obstacle avoidance control device 400.

The first storage unit 280 stores various types of data. The function of the first storage unit 280 is executed using the storage device provided in the information acquisition device 200.

The first control unit 290 controls each unit of the information acquisition device 200 so that various types of processes are executed. A function of the first control unit 290 is executed by a central processing unit (CPU) provided in the information acquisition device 200 reading a program from the first storage unit 280 and executing the program.

The state observation unit 291 estimates a position and an operation of the control target equipment 900 on the basis of the sensing data from the sensor provided in the control target equipment 900. The state observation unit 291 calculates a coordinate value indicating the estimated position of the control target equipment 900. The state observation unit 291 transmits data indicating the position and the operation of the control target equipment 900 to the nominal control device 300 and the obstacle avoidance control device 400 via the first communication unit 210. That is, the state observation unit 291 transmits state information of the control target equipment 900 to the nominal control device 300 and the obstacle avoidance control device 400 via the first communication unit 210.

The three-dimensional measurement unit 292 estimates the position of the obstacle on the basis of the data from the imaging device 100. The three-dimensional measurement unit 292 calculates a coordinate value indicating the estimated position and transmits calculated data to the obstacle avoidance control device 400 via the first communication unit 210. The three-dimensional measurement unit 292 may be configured to calculate the operation information of the obstacle (for example, velocity or acceleration information) when the obstacle moves and transmit the calculated data to the obstacle avoidance control device 400 via the first communication unit 210. In this way, the three-dimensional measurement unit 292 transmits state information of the obstacle to the obstacle avoidance control device 400 via the first communication unit 210.

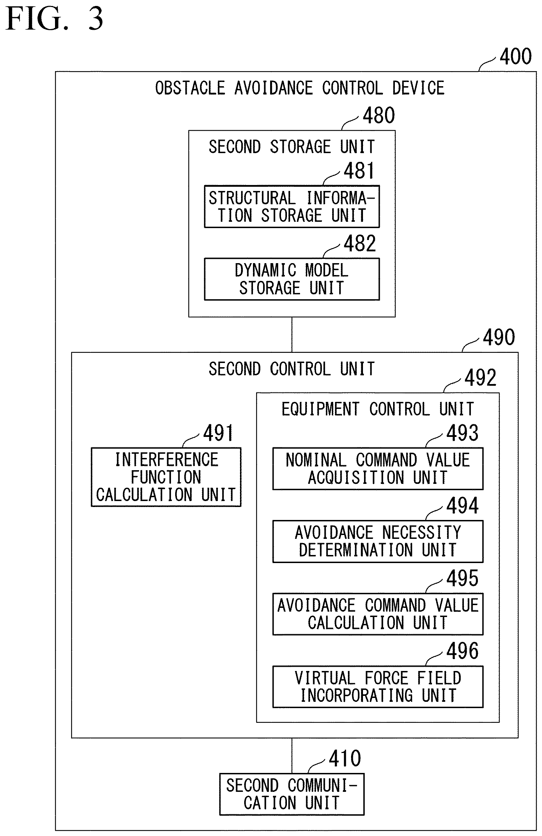

FIG. 3 is a schematic block diagram showing an example of a functional configuration of the obstacle avoidance control device 400. In the configuration shown in FIG. 3, the obstacle avoidance control device 400 includes a second communication unit 410, a second storage unit 480, and a second control unit 490. The second storage unit 480 includes a structural information storage unit 481 and a dynamic model storage unit 482. The second control unit 490 includes an interference function calculation unit 491 and an equipment control unit 492. The equipment control unit 492 includes a nominal command value acquisition unit 493, an avoidance necessity determination unit 494, an avoidance command value calculation unit 495, and a virtual force field incorporating unit 496.

The second communication unit 410 communicates with other devices. In particular, the second communication unit 410 receives the state information of the control target equipment 900 and the state information of the obstacle transmitted by the information acquisition device 200. Also, the second communication unit 410 receives the control command value calculated and transmitted by the nominal control device 300. Also, the second communication unit 410 transmits the control command value to the control target equipment 900. The obstacle avoidance control device 400 controls the control target equipment 900 by transmitting the control command value to the control target equipment 900.

The second storage unit 480 stores various types of data. A function of the second storage unit 480 is executed using the storage device provided in the obstacle avoidance control device 400.

The structural information storage unit 481 stores structural information of the control target equipment 900. The structural information of the control target equipment 900 is information about a shape and an operation of the control target equipment 900, such as a length and a thickness of an arm of the control target equipment 900, a direction in which a joint moves, and a movable range. If there is computer-aided design (CAD) data of the control target equipment 900, the CAD data may be used as the structural information.

The dynamic model storage unit 482 stores a dynamic model of the control target equipment 900. The dynamic model of the control target equipment 900 simulates an operation of a case in which the control target equipment 900 receives inputs of the state information of the control target equipment 900 and the control command value and follows the control command value.

The dynamic model may be configured to output position information of a predicted position of the control target equipment 900 at a future point in time. Alternatively, the dynamic model may be configured to output an operation quantity of the control target equipment 900. That is, the dynamic model may be configured to output a difference obtained by subtracting a current position from a predicted future position of the control target equipment 900.

The dynamic model is a model in which a differential value or a difference of a state indicated in state information x of the control target equipment 900 is obtained with respect to an input of a control command value u, and may be, for example, a state space model.

By using the information from the sensor of the control target equipment 900, the structural information stored in the structural information storage unit 481, and the dynamic model stored in the dynamic model storage unit 482, a space occupied by the control target equipment 900 can be estimated.

In particular, because the structural information of the control target equipment 900 includes information about a thickness of the arm and the like, the obstacle avoidance control device 400 can acquire position information in consideration of the thickness of the arm and the like as well as a position of a skeleton of the control target equipment 900. That is, the obstacle avoidance control device 400 can ascertain the position information of the control target equipment 900 as a position having a spatial spread.

Also, the obstacle avoidance control device 400 can more accurately ascertain the operation of the control target equipment 900 using the dynamic model of the control target equipment 900. Thereby, it is possible to determine whether or not the control target equipment 900 will come into contact with an obstacle, determine how the control target equipment 900 will move to come into contact therewith if the control target equipment 900 will come into contact with an obstacle, and perform the obstacle avoidance by the control target equipment 900 with higher accuracy.

The second control unit 490 controls each unit of the obstacle avoidance control device 400 so that various types of processes are executed. A function of the second control unit 490 is executed by the CPU provided in the obstacle avoidance control device 400 reading a program from the second storage unit 480 and executing the program.

The interference function calculation unit 491 calculates an interference function value and a value indicating a change over time in the interference function value. The interference function represents a value based on a positional relationship between the control target equipment 900 and the obstacle. An interference function B takes a value as in Expression (1).

[Math. 1]

$$\begin{cases} B(x) > 0 : \text{Position of control target equipment is outside of obstacle} \\ B(x) = 0 : \text{Position of control target equipment is on surface of obstacle} \\ B(x) < 0 : \text{Position of control target equipment is inside of obstacle} \end{cases}$$

$$\cdots (1)$$

In Expression (1), x denotes the state information of the control target equipment 900. For example, the information acquisition device 200 may be configured to transmit the position information of the surface of the control target equipment 900 with voxel data and the interference function calculation unit 491 may be configured to calculate a distance between both sides at a position where the control target equipment 900 is closest to the obstacle by applying the state information of the control target equipment 900 to the interference function B.

Hereinafter, it is assumed that the interference function value B(x) represents a distance between a position of the control target equipment 900 indicated in the state information x of the control target equipment 900 and the obstacle. When there are a plurality of obstacles, it is assumed that a distance from an obstacle closest to the position of the control target equipment 900 is indicated. Normally, because the control target equipment 900 does not enter the obstacle, the interference function value B(x) when the control target equipment 900 is located inside the obstacle may not be defined.

The interference function value B(x) indicates whether or not the control target equipment 900 will come into contact with the obstacle and the distance between the control target equipment 900 and the obstacle.

The interference function calculation unit 491 generates an interference function on the basis of state information of the obstacle and stores the interference function in the second storage unit 480.

As the control target equipment 900 operates and the position of the control target equipment 900 changes over time, the interference function value B(x) also changes over time. In this case, the interference function calculation unit 491 calculates a differential value of the interference function value B(x) between control steps as a value indicating a change over time in the interference function value B(x).

The control steps here are a series of processing steps for the obstacle avoidance control device 400 to transmit the control command value once to the control target equipment 900. That is, the obstacle avoidance control device 400 transmits a control command value to the control target equipment 900 in each periodic control step.

The interference function calculation unit 491 predicts the differential value of the interference function value B(x) between a current control step and the next control step. The differential value of the interference function value between the control steps is denoted by $\Delta B(x, u)$. Because the differential value of the interference function value B(x) depends on a change in the position of the control target equipment 900 and the change in the position of the control target equipment 900 depends on the control command value u, the control command value u is specified.

Also, the interference function calculation unit 491 calculates a potential function value P(x) with respect to the position of the control target equipment 900. The potential function value P(x) is a virtual force field value based on the distance between the control target equipment 900 and the obstacle. The interference function calculation unit 491 calculates a larger potential function value P(x) when the position of the control target equipment 900 indicated in the state information of the control target equipment 900 is closer to the obstacle (accordingly, when the interference function value B(x) is smaller).

The equipment control unit 492 controls the control target equipment 900 on the basis of either the nominal command value from the nominal control device 300 or the processing result of the avoidance command value calculation unit 495. As described above, the nominal command value is a control command value that does not take into account obstacle avoidance. On the other hand, the avoidance command value calculation unit 495 obtains a control command value so that the control target equipment 900 can avoid the obstacle.

When it is determined that the distance between the control target equipment 900 and the obstacle is greater than a prescribed threshold value, the equipment control unit 492 transmits a nominal command value from the nominal control device 300 or a control command value obtained by correcting the nominal command value in the virtual force field incorporating unit 496 to the control target equipment 900 via the second communication unit 410.

On the other hand, when it is determined that the distance between the control target equipment 900 and the obstacle is less than or equal to the prescribed threshold value, the avoidance command value calculation unit 495 attempts to calculate a control command value for avoiding the obstacle. When the avoidance command value calculation unit 495 has succeeded in calculating the control command value, the equipment control unit 492 transmits the control command value calculated by the avoidance command value calculation unit 495 or the control command value obtained by correcting the control command value in the virtual force field incorporating unit 496 to the control target equipment 900 via the second communication unit 410.

On the other hand, when the avoidance command value calculation unit 495 has failed to calculate the control command value, i.e., when the control command value for avoiding the obstacle has not been obtained, the equipment control unit 492 transmits a control command value for decelerating the control target equipment 900 to the control target equipment 900 via the second communication unit 410.

The nominal command value acquisition unit 493 acquires the nominal command value. Specifically, the nominal command value acquisition unit 493 extracts the nominal command value from the nominal control device 300 from a received signal of the second communication unit 410.

The avoidance necessity determination unit 494 determines whether or not the avoidance command value calculation unit 495 needs to perform a process of acquiring the control command value on the basis of a positional relationship between the control target equipment 900 and the obstacle. As described above, the avoidance necessity determination unit 494 compares the distance between the control target equipment 900 and the obstacle with the threshold value and determines whether or not the distance is greater than the threshold value. Specifically, the avoidance necessity determination unit 494 compares an interference function value B(x) with a threshold value $\alpha$ of a prescribed constant and determines whether or not $B(x) > \alpha$.

When $B(x) > \alpha$, the position of the control target equipment 900 is relatively far from the obstacle. In this case, the avoidance necessity determination unit 494 determines that the avoidance command value calculation unit 495 does not need to perform the process of acquiring the control command value. On the other hand, when B(x)≤α, the position of the control target equipment 900 is relatively close to the obstacle. In this case, the avoidance necessity determination unit 494 determines that the avoidance command value calculation unit 495 needs to perform the process of acquiring the control command value.

The avoidance command value calculation unit 495 obtains the avoidance command value. The avoidance command value is a control command value for the control target equipment 900 and is a control command value which satisfies constraint conditions including a condition sufficient for the control target equipment 900 not to come into contact with an obstacle, and an evaluation value obtained by applying the control command value to the evaluation function satisfies a prescribed end condition. In particular, the obstacle avoidance control device 400 controls the control target equipment 900 using the avoidance command value, so that the control target equipment 900 can be controlled so that the control target equipment 900 does not come into contact with the obstacle.

The avoidance command value calculation unit 495 obtains the avoidance command value using the end condition that a degree of a difference between the control command value serving as the solution to be obtained and the nominal command value satisfies a prescribed condition. For example, the avoidance command value calculation unit 495 obtains the avoidance command value by solving an optimization problem that minimizes the degree of the difference between the control command value serving as the solution to be obtained and the nominal command value under the above-described constraint conditions.

In this case, an evaluation function (also referred to as an objective function) in the optimization problem to be solved by the avoidance command value calculation unit 495 is shown as in, for example, Expression (2).

[Math. 2]

$$u^* = \underset{u}{\mathrm{argmin}}\{(u - u_r)^T(u - u_r)\} \qquad \cdots (2)$$

"u*" denotes a control command value that is a solution to the above optimization problem. "argmin" denotes a function that minimizes a value of the argument. In the case of Expression (2), "argmin" uses a value of u for minimizing the argument "(u—u_r)^T(u—u_r)" as a function value.

The superscript "T" attached to the vector or the matrix denotes the transpose of the vector or matrix.

"u_r" denotes a nominal command value from the nominal control device 300.

Expression (2) indicates that the control command value as close as possible to the nominal command value u_r is obtained under the constraint condition. Because the nominal command value u_r is a command value that has been calculated so that the control target equipment 900 achieves an objective set in the control target equipment 900, it can be expected that the objective set in the control target equipment 900 will be achieved in the control target equipment 900 by obtaining a command value close to the nominal command value u_r.

It is assumed that the data formats of u*, u, and u_r indicating the control command value are vectors of the same dimension. The number of dimensions of the above vectors is assumed to be the same as the number of dimensions of the control command value transmitted by the obstacle avoidance control device 400 to the control target equipment 900.

Expression (2) corresponds to an example of the evaluation function. The control command value u, which is the minimum solution in Expression (2), corresponds to an example of a control command value in which the evaluation value obtained by applying the control command value to the evaluation function satisfies a prescribed end condition.

The constraint conditions in the minimization problem to be solved by the avoidance command value calculation unit 495 are expressed by two types of inequalities. The first type between the two types of inequalities is shown as in Expression (3).

[Math. 3]

$$\Delta B(x, u) + \gamma B(x) \geq 0 \qquad \cdots (3)$$

γ is a constant of 0≤γ<1.

According to the value of y, it is possible to adjust an expected margin for the distance between the control target equipment 900 and the obstacle so that the control target equipment 900 and the obstacle do not come into contact with each other.

Normally, the control target equipment 900 does not come into contact with an obstacle, and B(x) indicates the distance between the control target equipment 900 and the obstacle. When the control target equipment 900 is close to an obstacle and ΔB(x, u) has a negative value, Expression (3) is valid if a magnitude of ΔB(x, u) is less than or equal

to $\gamma B(x)$.

From the above, it can be said that a part $(1-\gamma)B(x)$ of the distance between the control target equipment 900 and the obstacle denoted by $B(x)$ is used as a margin for preventing the control target equipment 900 and the obstacle from coming into contact with each other and excluded from the operable range of the control target equipment 900. When a larger value of $\gamma$ is set, the operable range of the control target equipment 900 is wider. On the other hand, when a smaller value of $\gamma$ is set, the margin for preventing the control target equipment 900 from coming into contact with the obstacle becomes larger. For example, even if the control target equipment 900 is pushed toward the obstacle by an unexpected external force, the control target equipment 900 is unlikely to hit the obstacle.

As shown in Expression (3), the avoidance command value calculation unit 495 obtains the avoidance command value using the interference function value and the value indicating a change over time in the interference function value.

When there are a plurality of obstacles, the constraint condition of Expression (3) can be set for each obstacle. Thereby, the obstacle avoidance control device 400 can control the control target equipment 900 so that the control target equipment 900 does not come into contact with any of the obstacles. Alternatively, the interference function may be designed for a collection of a plurality of obstacles.

Expression (3) shows a condition sufficient for the control target equipment 900 not to come into contact with an obstacle in the next control step if the control target equipment 900 does not come into contact with the obstacle in a current control step. In this regard, a description will be given.

The current control step is denoted by t and the control step following the control step t is denoted by t+1. The interference function value in the control step t is denoted by B(xt).

The interference function value in the control step t+1 is denoted by $B(x_{t+1})$. The difference obtained by subtracting B(xt) from $B(x_{t+1})$ is denoted by $\Delta B(x_t, ut)$. $\Delta B(x_t, u_t)$ is shown as in Expression (4).

[Math. 4]

$$\Delta B(x_t, u_t) = B(x_{t+1}) - B(x_t) \qquad \cdots (4)$$

Also, Expression (5) can be obtained from Expression (3).

[Math. 5]

$$\Delta B(x_t, u_t) \geq -\gamma B(x_t) \qquad \cdots (5)$$

Expression (6) can be obtained from Expression (4) and (4).

[Math. 6]

$$B(x_{t+1}) = B(x_t) + \Delta B(x_t, u_t)$$
$$\geq B(x_t) - \gamma B(x_t) \qquad \cdots (6)$$

Because $0 \leq \gamma < 1$, $B(x_t) - \gamma B(x_t) \geq 0$ and $B(x_{t+1}) > 0$ when $B(x_t) > 0$. Accordingly, if the position of the control target equipment 900 is outside of the obstacle in the control step t, the position of the control target equipment 900 is also outside of the obstacle in the control step t+1.

When the position information of the surface of the control target equipment 900 is used for determining the constraint condition of Expression (3), the avoidance command value calculation unit 495 can more accurately determine whether or not the condition of Expression (3) is satisfied. In particular, when the position information of the surface of the control target equipment 900 and the position information of the surface of the obstacle are used, the avoidance command value calculation unit 495 obtains a distance between both sides at a position where the control target equipment 900 is closest to the obstacle using the interference function B.

The avoidance command value calculation unit 495 can determine the condition more accurately by determining the condition of Expression (3) using the above distance. In this regard, it can be expected that the avoidance command value calculation unit 495 will be able to obtain a more accurate control command value and the equipment control unit 492 will be able to control the control target equipment 900 with higher accuracy.

As an example of a case in which the position information of the surface of the control target equipment 900 is used for determining the constraint condition of Expression (3), a case in which the information acquisition device 200 transmits the position information of the surface of the control target equipment 900 to the obstacle avoidance control device 400, for example, with voxel data, may be mentioned.

As an example of a case in which the position information of the surface of the obstacle is used for determining the constraint condition of Expression (3), a case in which the information acquisition device 200 transmits the position information of the surface of the obstacle, for example, as the voxel data, to the obstacle avoidance control device 400 and the interference function calculation unit 491 generates an interference function using the position information may be mentioned.

On the other hand, when position information of a reference point set in the control target equipment 900 is used for the determination of Expression (3), the conditional expression of Expression (3) can be set for each reference point. In this regard, the obstacle avoidance control device 400 can deal with a plurality of reference points relatively easily.

Even if there are a plurality of obstacles, the conditional expression of Expression (3) can be set for each obstacle. In this regard, the obstacle avoidance control device 400 can deal with a plurality of obstacles relatively easily.

The second type between the two types of inequalities indicating the constraint conditions in a minimization problem to be solved by the avoidance command value calculation unit 495 is shown as in Expression (7).

[Math. 7]

$$u_{i\_min} \leq u_i \leq u_{i\_max} \quad (i = 1, 2, \ldots, N) \qquad \cdots (7)$$

$u_i$ (i is an integer of $1 \leq i \leq N$) is a scalar value indicating a control command value for each movable part of the control target equipment 900, for example, for each joint of the control target equipment 900. N denotes the number of movable parts of the control target equipment 900. i denotes an identification number for identifying a movable part.

The movable part identified by the identification number i is referred to as an $i^{th}$ movable part. Therefore, $u_i$ denotes a control command value for the $i^{th}$ movable part.

$u_{i\_min}$ and $u_{i\_max}$ are a lower limit value and an upper limit value of $u_i$, which are predetermined by the specifications of the control target equipment 900, respectively.

Expression (7) indicates a constraint condition that each control command value is set within the range of the upper and lower limit values specified by the specifications of the movable part. The specifications of the movable part are defined by, for example, the specifications of the actuator used for the movable part.

The control command value u is expressed as a vector by summing $u_i$ (i = 1, 2, ..., N).

As described above, the avoidance command value calculation unit 495 obtains an avoidance command value when the avoidance necessity determination unit 494 determines that a process of acquiring the avoidance command value is necessary.

The virtual force field incorporating unit 496 reflects an operation in which the control target equipment 900 moves farther away from the obstacle when the control target equipment 900 is closer to the obstacle in at least one of the nominal command value and the avoidance command value.

The fact that the control target equipment 900 moves farther away from the obstacle when the control target equipment 900 is closer to the obstacle may indicate that the control target equipment 900 moves farther away from the obstacle at greater acceleration when the control target equipment 900 is closer to the obstacle. Alternatively, the fact that the control target equipment 900 moves farther away from the obstacle when the control target equipment 900 is closer to the obstacle may indicate that a distance from the obstacle is longer when the control target equipment 900 is closer to the obstacle. Alternatively, the fact that the control target equipment 900 moves farther away from the obstacle when the control target equipment 900 is closer to the obstacle may indicate that the control target equipment 900 moves farther away from the obstacle only when a distance between the control target equipment 900 and the obstacle is less than or equal to a prescribed threshold value.

For example, the virtual force field incorporating unit 496 may be configured to simulate a virtual force field based on a positional relationship between the control target equipment 900 and an obstacle. In this case, the virtual force field incorporating unit 496 may calculate a greater repulsive force when the distance between the control target equipment 900 and the obstacle is shorter. When the repulsive force generated in the control target equipment 900 is greater, the acceleration of the control target equipment 900 becomes greater and a movement quantity of the control target equipment 900 away from the obstacle becomes greater.

For example, the control command value calculated by the virtual force field incorporating unit 496 is denoted by $u_p$. Assuming that the control command value $u_p$ indicates a movement quantity of the reference point set in the control target equipment 900, $u_p = (\Delta x, \Delta y, \Delta z)$ is shown.

The obstacle may be represented by a point mass and the coordinates of the obstacle may be $(x_0, y_0, z_0)$. The virtual force field incorporating unit 496 may be configured to calculate the control command value $u_p$ for moving the control target equipment 900 positioned at the coordinates (x, y, z) away from the obstacle on the basis of Expression (8).

[Math. 8]

$$u_p = P(x, y, z) = -\nabla P_0(x, y, z) \qquad \cdots (8)$$

P(x, y, z) denotes a potential function. $\nabla$ denotes nabla. $P_0(x, y, z)$ is shown as in Expression (9).
[Math. 9]

$$P_0(x, y, z) = \frac{1}{\sqrt{(x - x_0)^2 + (y - y_0)^2 + (z - z_0)^2}} \qquad \cdots (9)$$

Also, while x denotes a three-dimensional position of the control target equipment 900 in Expression (1), Expression (3) to Expression (6), and Expression (10) to Expression (12), (x, y, z) indicates coordinates in Expression (8) and Expression (9). Therefore, while x denotes a vector quantity or matrix in Expression (1), Expression (3) to Expression (6), and Expression (10) to Expression (12), x denotes a scalar quantity in Expression (8) and Expression (9).

The virtual force field incorporating unit 496 may be configured to calculate the movement quantity of the control target equipment 900 as a command value for one representative point such as the tip of the robot arm and distribute the calculated movement quantity to each joint. Alternatively, the virtual force field incorporating unit 496 may be configured to calculate the movement quantity to be indicated with respect to each of the plurality of parts of the control target equipment 900 such as each joint of the robot.

The virtual force field incorporating unit 496 reflects the calculated command value in the control command value, so that it is possible to prevent contact between the control target equipment 900 and an obstacle more reliably.

Hereinafter, a case in which the virtual force field incorporating unit 496 reflects the calculated command value in both the nominal command value and the avoidance command value will be described as an example.

However, the process of the virtual force field incorporating unit 496 is not essential for the obstacle avoidance control device 400. Accordingly, a configuration in which the obstacle avoidance control device 400 does not include the virtual force field incorporating unit 496 may be adopted.

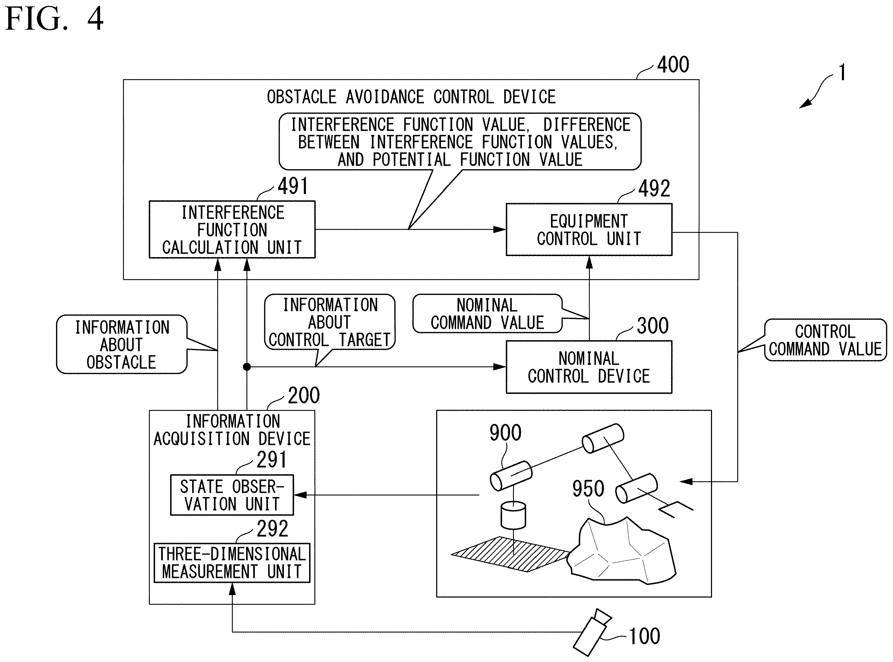

FIG. 4 is a diagram showing an example of a flow of data in the obstacle avoidance control system 1. In FIG. 4, an obstacle is denoted by reference sign 950. The obstacle 950 is similar to the obstacle described above.

As described above, the sensing data of the sensor of the control target equipment 900 is input to the state observation unit 291 of the information acquisition device 200.

Image data of the imaging device 100 is input to the three-dimensional measurement unit 292 of the information acquisition device 200. When there is additional information about the imaging device 100, the additional information is input to the three-dimensional measurement unit 292 in addition to the image data.

The information acquisition device 200 transmits state information of the control target equipment 900 calculated by the state observation unit 291 to the nominal control device 300 and the obstacle avoidance control device 400. For example, the information acquisition device 200 transmits position information of the surface of the control target equipment 900 with voxel data. In addition, the information acquisition device 200 transmits information indicating the operation of the control target equipment 900, such as a velocity, acceleration, an angular velocity, or angular acceleration of a surface or a reference point of the control target equipment 900. For example, the information acquisition device 200 may be configured to transmit a vector in which generalized coordinates q and a generalized velocity q' are arranged.

Also, the information acquisition device 200 transmits the state information of the obstacle 950 to the obstacle avoidance control device 400. In particular, the information acquisition device 200 transmits three-dimensional position information of the obstacle 950 to the obstacle avoidance control device 400. The data format in which the information acquisition device 200 transmits the position information of the obstacle 950 is not limited to a specific data format. For example, the information acquisition device 200 may be configured to transmit the position information of the obstacle 950 with voxel data. Alternatively, the information acquisition device 200 may be configured to transmit the position information of the obstacle 950 as surface data. Alternatively, the information acquisition device 200 may be configured to transmit the position information of the obstacle 950 as point cloud data.

The nominal control device 300 calculates the nominal command value $u_r$ using the state information of the control target equipment 900 received from the information acquisition device 200. The nominal control device 300 transmits the calculated nominal command value $u_r$ to the obstacle avoidance control device 400.

The interference function calculation unit 491 of the obstacle avoidance control device 400 calculates the interference function value B(x), the differential value $\Delta B(x, u)$ of B(x) between the control steps, and the potential function value P(x) on the basis of the state information of the control target equipment 900 and the state information of the obstacle obtained from the information acquisition device 200 and the control command value set by the equipment control unit 492. As described above, the process of the virtual force field incorporating unit 496 is not essential. Accordingly, the calculation of the potential function value by the interference function calculation unit 491 is not essential.

The equipment control unit 492 of the obstacle avoidance control device 400 acquires the control command value u for the control target equipment 900 using the nominal command value $u_r$ obtained from the nominal control device 300, the interference function value B(x) obtained from the interference function calculation unit 491, the differential value $\Delta B(x, u)$ of the interference function value, and the potential function value P(x). The equipment control unit 492 controls the control target equipment 900 by transmitting the acquired control command value u to the control target equipment 900 via the second communication unit 410.

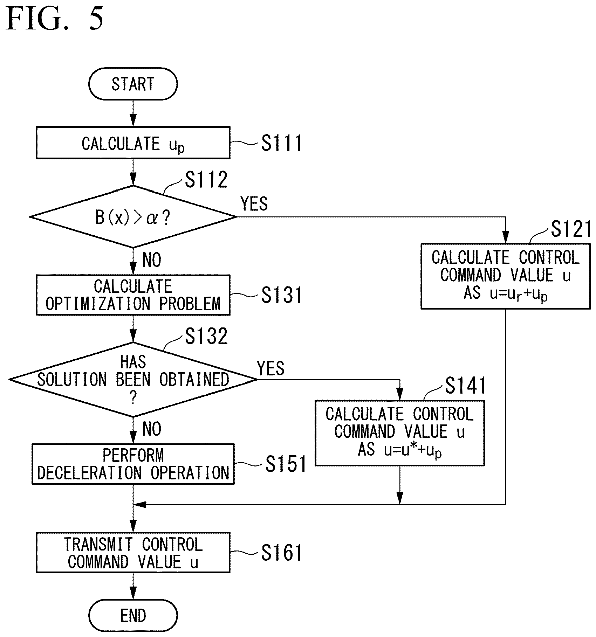

An operation of the obstacle avoidance control device 400 will be described with reference to FIGs. 5 to 7.

FIG. 5 is a flowchart showing an example of a processing procedure in which the obstacle avoidance control device 400 acquires a control command value for the control target equipment 900. The obstacle avoidance control device 400 performs the process of FIG. 5 for each control step of control for the control target equipment 900.

In the process of FIG. 5, the virtual force field incorporating unit 496 calculates the control command value $u_p$ for simulating the force field on the basis of the potential function value P(x) calculated by the interference function calculation unit 491 (step S111). The control command value $u_p$ is used as a correction term for adding a value to the nominal command value or the avoidance command value.

Also, the avoidance necessity determination unit 494 determines whether or not the interference function value B(x) calculated by the interference function calculation unit 491 is larger than a threshold value $\alpha$ (step S112).

When it is determined that the interference function value B(x) is larger than the threshold value $\alpha$ (step S112: YES), the equipment control unit 492 calculates the control command value u for the control target equipment 900 as a value obtained by adding the control command value $u_p$ to the nominal command value $u_r$ (step S121). That is, the equipment control unit 492 calculates the control command value u as $u=u_r+u_p$.

The equipment control unit 492 controls the control target equipment 900 by transmitting the control command value u to the control target equipment 900 via the second communication unit 410 (step S161).

After step S161, the obstacle avoidance control device 400 ends the process of FIG. 5.

On the other hand, when the avoidance necessity determination unit 494 determines that the interference function value B(x) is less than or equal to the threshold value $\alpha$ in step S112 (step S112: NO), the avoidance command value calculation unit 495 attempts to acquire the control command value based on the calculation of the above-mentioned optimization problem (step S131).

The equipment control unit 492 determines whether or not the avoidance command value calculation unit 495 has obtained the solution to the optimization problem in step S131 (step S132).

When it is determined that the solution has been obtained (step S132: YES), the equipment control unit 492 calculates the control command value u for the control target equipment 900 as a value obtained by adding the control command value $u_p$ to the control command value u* based on the solution to the optimization problem (step S141). That is, the equipment control unit 492 calculates the control command value u as $u=u*+u_p$.

After step S141, the process proceeds to step S161.

On the other hand, when it is determined that the solution to the optimization problem has not been obtained in the determination of step S132 (step S132: NO), the equipment control unit 492 generates a control command value u so that the control target equipment 900 is decelerated (step S151).

After step S151, the process proceeds to step S161.

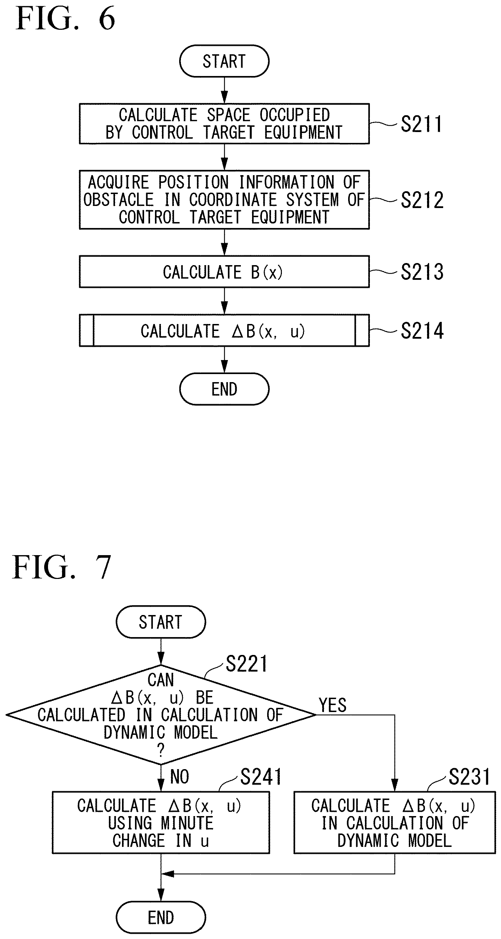

FIG. 6 is a flowchart showing an example of a processing procedure in which the obstacle avoidance control device 400 calculates a value associated with the interference function. The obstacle avoidance control device 400 performs the process of FIG. 6 as a preprocess for the process of FIG. 5 for each control step of controlling the control target equipment 900.

In the process of FIG. 6, the interference function calculation unit 491 calculates position information of a space occupied by the control target equipment 900 using the information about the control target equipment 900 transmitted by the information acquisition device 200, the structural information of the control target equipment 900 stored in the structural information storage unit 481, and the like (step S211). The interference function calculation unit 491 calculates the position information of the space occupied by the control target equipment 900 with a coordinate value based on a coordinate system of the control target equipment 900. For example, the coordinate system of the control target equipment 900 described here is associated with a coordinate value for use in a control command value transmitted by the obstacle avoidance control device 400 to the control target equipment 900.

Subsequently, the interference function calculation unit 491 acquires the position information of the obstacle (step S212). The three-dimensional measurement unit 292 may be configured to detect the position of the obstacle and generate position information based on the coordinate system of the control target equipment 900 and the interference function calculation unit 491 may be configured to use the position information. Alternatively, the three-dimensional measurement unit 292 may be configured to generate the position information of the obstacle with a coordinate value of a coordinate system different from the coordinate system of the control target equipment 900 and the interference function calculation unit 491 may be configured to perform coordinate conversion into the coordinate value of the coordinate system of the control target equipment 900.

Subsequently, the interference function calculation unit 491 calculates the interference function value B(x) on the basis of the position information of the control target equipment 900 and the position information of the obstacle (step S213).

Also, the interference function calculation unit 491 calculates a differential value $\Delta B(x, u)$ of the interference function value on the basis of the position information of the control target equipment 900, the operation information of the control target equipment 900, and the position information of the obstacle (step S214).

The interference function calculation unit 491 may be configured to use the operation information of the control target equipment 900 that is calculated by the state observation unit 291 from the sensing data of the sensor of the control target equipment 900 as the operation information of the control target equipment 900. Alternatively, the interference function calculation unit 491 may be configured to use the control command value u for the control target equipment 900 in a previous control step as the operation information of the control target equipment 900. Alternatively, the interference function calculation unit 491 may be configured to use both of the above as the operation information of the control target equipment 900.

After step S214, the obstacle avoidance control device 400 ends the process of FIG. 6.

FIG. 7 is a flowchart showing an example of a processing procedure in which the obstacle avoidance control device 400 calculates the differential value $\Delta B(x, u)$ of the interference function value. The obstacle avoidance control device 400 performs the process of FIG. 7 in step S214 of FIG. 6.

In the process of FIG. 7, the interference function calculation unit 491 determines whether $\Delta B(x, u)$ can be calculated in the calculation of the dynamic model (step S221).

When it is determined that the calculation is possible (step S221; YES), the interference function calculation unit 491 calculates $\Delta B(x, u)$ in the calculation of the dynamic model (step S231).

After step S231, the obstacle avoidance control device 400 ends the process of FIG. 7.

On the other hand, when it is determined that $\Delta B(x, u)$ cannot be calculated in the calculation of the dynamic model in step S221 (step S221: NO), the interference function calculation unit 491 calculates $\Delta B(x, u)$ using a minute change in the control command value u. For example, the interference function calculation unit 491 approximately calculates $\Delta B(x, u)$ using Expression (10).

[Math. 10]

$$\Delta B(x, u) \approx \frac{\partial B(x, u)}{\partial u}\Delta t \cdot u \qquad \cdots (10)$$

$\Delta t$ denotes a time interval between control steps. B(x, u) denotes the interference function value. Because the operation of the control target equipment 900 changes and the interference function value changes when the control command value u changes, the interference function B is referred to as a function of the control command value u.

After step S241, the obstacle avoidance control device 400 ends the process of FIG. 7.

When the processing of step S231 is compared with the processing of step S241, it is not necessary to perform the trial using a minute change in u and the approximation as in Expression (10) in the processing of step S231. In this regard, it can be expected that the accuracy of the obtained $\Delta B(x, u)$ will be higher in the processing of step S231 than in the processing of step S241. On the other hand, even if $\Delta B(x, u)$ cannot be calculated in step S231, it can be expected that $\Delta B(x, u)$ will be able to be calculated in the processing of step S241.

Therefore, the interference function calculation unit 491 determines whether $\Delta B(x, u)$ can be calculated in the processing of step S231 and performs the processing of step S231 if $\Delta B(x, u)$ can be calculated. On the other hand, if $\Delta B(x, u)$ cannot be calculated in the processing of step S231, the interference function calculation unit 491 performs the processing of step S241.

As described above, the nominal command value acquisition unit 493 acquires the nominal command value. The nominal command value is, so to speak, a reference control command value for use in obtaining a command value for the control target equipment 900. The avoidance command value calculation unit 495 obtains the avoidance command value. The avoidance command value is a control command value that satisfies constraint conditions including a condition sufficient for the control target equipment 900 not to come into contact with the obstacle as in Expression (3) and that satisfies a prescribed condition associated with a magnitude of a degree of a difference from the nominal command value as in Expression (2). The equipment control unit 492 controls the control target equipment 900 on the basis of either the nominal command value or the processing result of the avoidance command value calculation unit 495.

The obstacle avoidance control device 400 can set a constraint condition for avoiding contact between the control target equipment 900 and an obstacle. When a plurality of reference points for avoiding contact between the control target equipment 900 and an obstacle are set in the control target equipment 900, a constraint condition can be set for each reference point. In this way, in the obstacle avoidance control device 400, the reference point for controlling the control target equipment 900 to avoid the obstacle is not limited to one place and control can be performed to avoid obstacles with respect to various parts of the control target equipment 900.

Also, in the obstacle avoidance control device 400, when there are a plurality of obstacles, a constraint condition can be set for each obstacle. In this regard, according to the obstacle avoidance control device 400, when there are a plurality of obstacles, it is possible to deal with the obstacles relatively easily.

Also, the nominal command value acquisition unit 493 acquires a nominal command value as the nominal command value. The nominal command value is a control command value when obstacle avoidance by the control target equipment 900 is not taken into account.

The nominal command value is a command value set to achieve the target set in the control target equipment 900 and it can be expected that the obstacle avoidance control device 400 will be able to achieve the target by generating the avoidance command value in consideration of obstacle avoidance so that the avoidance command value is close to the nominal command value.

According to the obstacle avoidance control device 400, the nominal command value can be used as a reference when the avoidance command value is generated in the above way. In this regard, the avoidance command value can be generated relatively easily.

Also, the interference function calculation unit 491 calculates the interference function value (B(x)) and a value indicating a change over time in the interference function value ($\Delta$B(x, u)). The interference function value is a value based on a positional relationship between the control target equipment 900 and the obstacle. The avoidance command value calculation unit 495 obtains the avoidance command value using the interference function value and the value indicating the change over time in the interference function value.

According to the obstacle avoidance control device 400, by using the above values, a degree of a possibility that the control target equipment 900 will come into contact with an obstacle can be estimated and a countermeasure such as obstacle avoidance can be taken as necessary.

In the obstacle avoidance control device 400, the distance between the control target equipment 900 and the obstacle can be used as an interference function and a function value can be easily calculated from a position of the control target equipment 900 and a position of the obstacle. In this regard, the load on the obstacle avoidance control device 400 can be lightened.

Also, the avoidance necessity determination unit 494 determines whether or not a process of acquiring the avoidance command value is necessary on the basis of the positional relationship between the control target equipment 900 and the obstacle. The avoidance command value calculation unit 495 obtains the avoidance command value when the avoidance necessity determination unit 494 determines that the process of acquiring the avoidance command value is necessary.

When the avoidance necessity determination unit 494 determines that the process of acquiring the avoidance command value is unnecessary, the nominal command value generated by the nominal control device 300 can be used as the command value for the control target equipment 900 and the obstacle avoidance control device 400 does not need to generate a command value newly. In this regard, the load on the obstacle avoidance control device 400 can be relatively lightened.

Also, when the equipment control unit 492 determines that the avoidance command value calculation unit 495 has failed to acquire the avoidance command value, the equipment control unit 492 causes the control target equipment 900 to decelerate.

When the avoidance command value calculation unit 495 has failed to acquire the avoidance command value, there is a possibility that contact between the control target equipment 900 and an obstacle will not be avoided. Therefore, the equipment control unit 492 causes the control target equipment 900 to decelerate. Thereby, it is possible to secure a time period until the control target equipment 900 comes into contact with the obstacle, and it is possible to take a countermeasure such as manually moving the obstacle. Also, even though the control target equipment 900 has come into contact with an obstacle, it can be expected that the deceleration of the control target equipment 900 will not cause a problem or a degree of a problem will be lightened.

Also, the virtual force field incorporating unit 496 reflects an operation in which the control target equipment 900 moves farther away from the obstacle with greater acceleration when the control target equipment 900 is closer to the obstacle in at least one of the nominal command value and the avoidance command value. The equipment control unit 492 controls the control target equipment 900 on the basis of either the nominal command value in which the above operation is reflected or the avoidance command value in which the above operation is reflected.

Thereby, the control target equipment 900 operates to move farther away from the obstacle when the control target equipment 900 is closer to the obstacle. According to the obstacle avoidance control device 400, in this regard, the control target equipment 900 can more reliably avoid the obstacle.

Also, the avoidance command value calculation unit 495 obtains an avoidance command value that satisfies a condition sufficient for the reference point not to come into contact with an obstacle for each reference point set in the control target equipment 900.

In this way, in the obstacle avoidance control device 400, the expression of the constraint condition can be set for each reference point. According to the obstacle avoidance control device 400, in this regard, when a plurality of reference points are set in the control target equipment, it is possible to deal with the obstacle relatively easily.

Also, the avoidance command value calculation unit 495 obtains an avoidance command value that satisfies a condition sufficient for the control target equipment 900 not to come into contact with the obstacle for each obstacle.

In this way, in the obstacle avoidance control device 400, the expression of the constraint condition can be set for each obstacle. According to the obstacle avoidance control device 400, in this regard, when there are a plurality of obstacles, it is possible to deal with the obstacles relatively easily.

Also, the avoidance command value calculation unit 495 obtains the avoidance command value that satisfies a condition sufficient for the control target equipment 900 not to come into contact with the obstacle, the avoidance command value being determined on the basis of a distance between the control target equipment 900 and the obstacle at a position where the control target equipment 900 is closest to the obstacle.

In this way, the avoidance command value calculation unit 495 can obtain the avoidance command value in which a possibility of contact between the control target equipment 900 and the obstacle is reflected more accurately by obtaining the avoidance command value using the distance between the control target equipment 900 and the obstacle at the position where the control target equipment 900 is closest to the obstacle. According to the obstacle avoidance control device 400, in this regard, the control target equipment 900 can be controlled with relatively high accuracy.

<Second example embodiment>

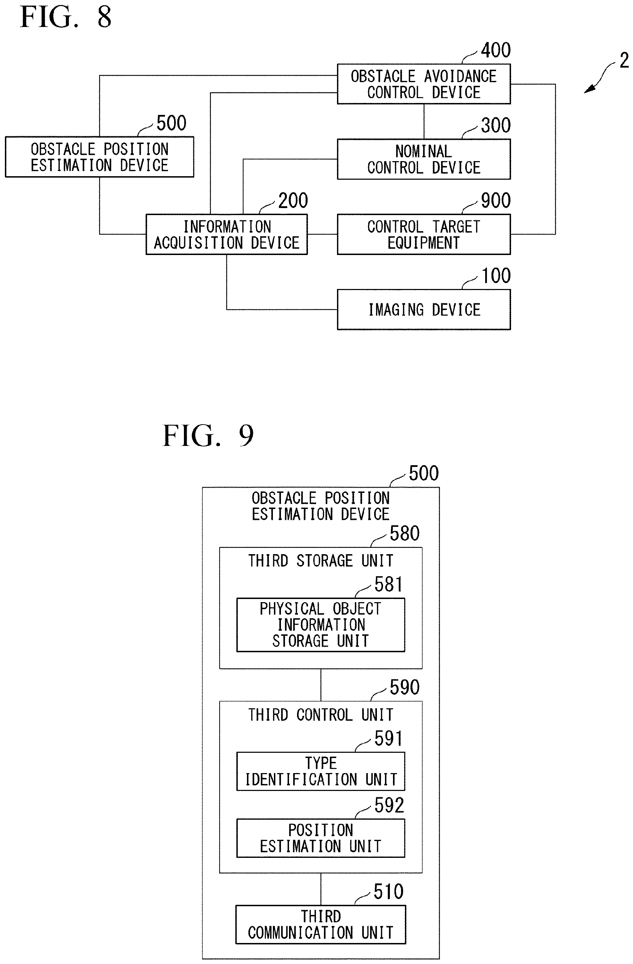

FIG. 8 is a schematic configuration diagram showing an example of a device configuration of an obstacle avoidance control system according to a second example embodiment. In the configuration shown in FIG. 8, an obstacle avoidance control system 2 includes an imaging device 100, an information acquisition device 200, a nominal control device 300, an obstacle avoidance control device 400, and an obstacle position estimation device 500. Also, the obstacle avoidance control system 2 controls control target equipment 900.

The obstacle avoidance control system 2 is different from the case of the obstacle avoidance control system 1 in that the obstacle position estimation device 500 is provided. In other respects, the obstacle avoidance control system 2 is similar to the obstacle avoidance control system 1. Description of similarities between the obstacle avoidance control system 2 and the obstacle avoidance control system 1 will be omitted and the reference signs shown in FIG. 2 and the reference signs shown in FIG. 3 will be cited as necessary.

FIG. 9 is a schematic block diagram showing an example of a functional configuration of the obstacle position estimation device 500. In the configuration shown in FIG. 9, the obstacle position estimation device 500 includes a third communication unit 510, a third storage unit 580, and a third control unit 590. The third storage unit 580 includes a physical object information storage unit 581. The third control unit 590 includes a type identification unit 591 and a position estimation unit 592.

The third communication unit 510 communicates with other devices. In particular, the third communication unit 510 receives position information of an obstacle from the information acquisition device 200. Also, the third communication unit 510 transmits the position information of the obstacle in which a process of the position estimation unit 592 is reflected to the obstacle avoidance control device 400. In addition to the information received from the information acquisition device 200, the third communication unit 510 may be configured to transmit obstacle position information calculated by the position estimation unit 592 to the obstacle avoidance control device 400. Alternatively, the third communication unit 510 may be configured to transmit information obtained by replacing the position information of the obstacle with the position information calculated by the position estimation unit 592 with respect to the information received from the information acquisition device 200 to the obstacle avoidance control device 400.

The third storage unit 580 stores various types of data. A function of the third storage unit 580 is executed using the storage device provided in the obstacle position estimation device 500.

The physical object information storage unit 581 stores physical object information. The physical object information storage unit 581 stores information in which type identification information for identifying a type of physical object and information for estimating a position of the physical object such as a shape and a size of the physical object are associated as the physical object information.

The type of physical object here is not limited to a specific type of physical object as long as it can be identified. For example, the physical object information storage unit 581 may store physical object information for each name of a physical object such as a PET bottle or a cup. Alternatively, the physical object information storage unit 581 may store physical object information for each shape of the physical object such as a columnar physical object or a circular physical object. Also, the physical object identification information may include a parameter as in a case in which, when PET bottle information is included in physical object identification information, a capacity of the PET bottle is a parameter.

The third control unit 590 controls each unit of the obstacle position estimation device 500 so that various types of processes are executed. A function of the third control unit 590 is executed by a CPU provided in the obstacle position estimation device 500 reading a program from the third storage unit 580 and executing the program.

The type identification unit 591 identifies a type of physical object that is an obstacle on the basis of information about the obstacle calculated by a three-dimensional measurement unit 292.

For example, the type identification unit 591 may be configured to extract a physical object within the obstacle in a process of dividing the obstacle indicated in information calculated by the three-dimensional measurement unit 292 into parts that are physically grouped or the like. The type identification unit 591 may be configured to identify a type of physical object by performing pattern matching for each extracted physical object.

For example, the type identification unit 591 may be configured as a physical object detector based on a neural network, such as You Only Look Once (YOLO) or a single shot multibox detector (SSD).

The position estimation unit 592 estimates a position of a physical object that is an obstacle on the basis of the information about the obstacle calculated by the three-dimensional measurement unit 292 and the physical object information stored in the physical object information storage unit 581.

For example, the position estimation unit 592 reads information about a position and a size of the physical object from the physical object information stored in the physical object information storage unit 581 on the basis of the type of physical object identified by the type identification unit 591. The position estimation unit 592 calculates position information of the physical object under the assumption that there is the physical object having the position and the size read from the physical object information at the position of the physical object indicated in the information about the obstacle calculated by the three-dimensional measurement unit 292. The position estimation unit 592 may be configured to calculate the position of the physical object in the format of a coordinate value.

Thereby, the position estimation unit 592 regards the obstacle as a physical object having a three-dimensional spread and calculates coordinates thereof. For example, when the imaging device 100 captures an image of an obstacle from one side and does not obtain an image of the other side, the position estimation unit 592 can calculate the position information of the obstacle in a portion not shown in the image.

The position estimation unit 592 transmits the calculated position information for each physical object to the obstacle avoidance control device 400 via the third communication unit 510. As described above, the third communication unit 510 may be configured to transmit the position information for each physical object calculated by the position estimation unit 592 to the obstacle avoidance control device 400 in addition to the information received from the information acquisition device 200. Alternatively, the third communication unit 510 may be configured to transmit information obtained by replacing the position information of the obstacle with the position information calculated by the position estimation unit 592 to the obstacle avoidance control device 400 with respect to the information received from the information acquisition device 200.

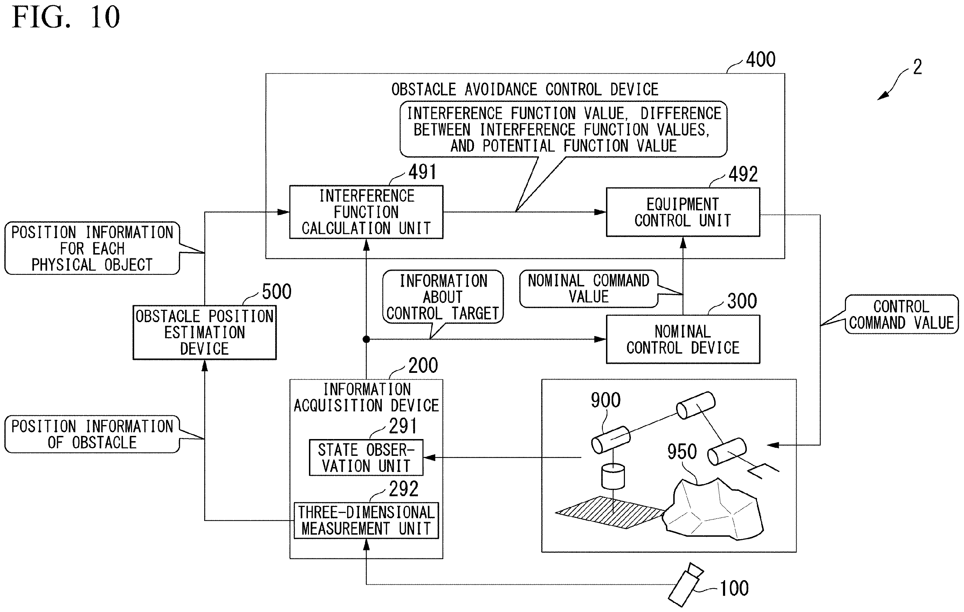

FIG. 10 is a diagram showing an example of a flow of data in the obstacle avoidance control system 2.

When FIG. 10 is compared with FIG. 4, the obstacle avoidance control system 2 of FIG. 10 is different from the obstacle avoidance control system 1 of FIG. 4 in that the obstacle position estimation device 500 is provided. Due to the above difference, the information acquisition device 200 transmits the information about the obstacle calculated by the three-dimensional measurement unit 292 to the obstacle avoidance control device 400 in FIG. 4, whereas the information acquisition device 200 transmits the information about the obstacle calculated by the three-dimensional measurement unit 292 to the obstacle position estimation device 500 in FIG. 10.

In FIG. 10, the obstacle position estimation device 500 transmits information obtained by replacing the position information of the obstacle with the position information calculated by the position estimation unit 592 with respect to the information received from the information acquisition device 200 to the obstacle avoidance control device 400. In the obstacle avoidance control device 400, the interference function calculation unit 491 calculates an interference function value, a difference between interference function values, and a potential function value using the information calculated by the state observation unit 291 of the information acquisition device 200 and the information from the obstacle position estimation device 500.

In other respects, FIG. 10 is similar to the case of FIG. 4.

As described above, the type identification unit 591 identifies a type of physical object that is an obstacle. The position estimation unit 592 reads information based on the type identified by the type identification unit 591 from the physical object information indicating the size and the shape of the physical object for each type of physical object and estimates a position of the physical object serving as the obstacle using the read information.

Thereby, the obstacle avoidance control system 2 can obtain the position information of the obstacle with higher accuracy. For example, the obstacle position estimation device 500 can supplement the position information of the obstacle with respect to a portion not shown in the image of the imaging device 100.

By obtaining the position information of the obstacle with higher accuracy, the obstacle avoidance control device 400 can calculate a command value for causing the control target equipment 900 to avoid the obstacle with higher accuracy.

<Third example embodiment>

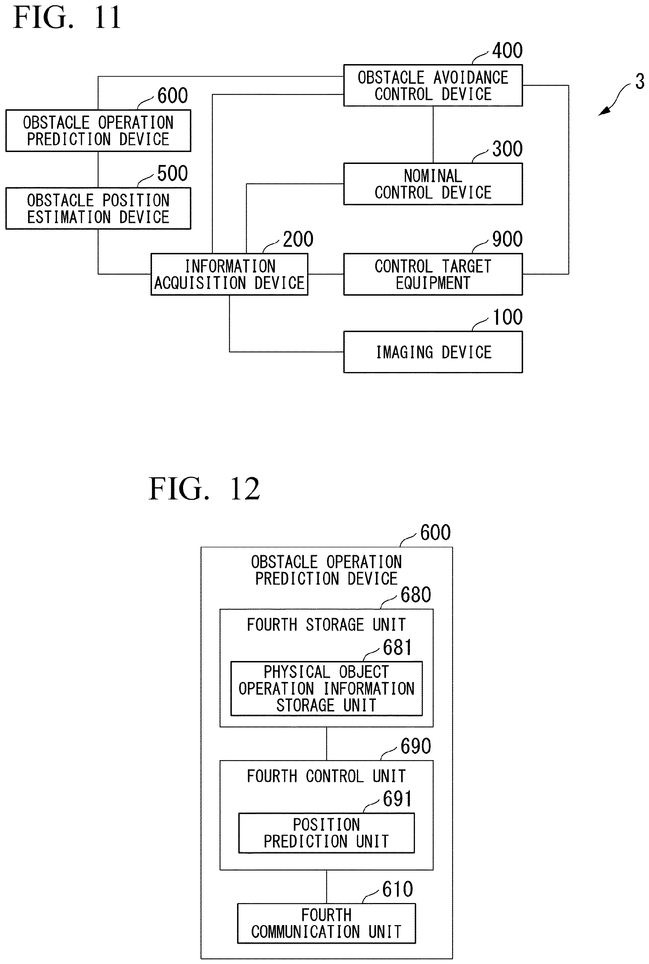

FIG. 11 is a schematic configuration diagram showing an example of a device configuration of the obstacle avoidance control system according to a third example embodiment. In the configuration shown in FIG. 11, an obstacle avoidance control system 3 includes an imaging device 100, an information acquisition device 200, a nominal control device 300, an obstacle avoidance control device 400, an obstacle position estimation device 500, and an obstacle operation prediction device 600. Also, the obstacle avoidance control system 3 controls control target equipment 900.

The obstacle avoidance control system 3 is different from the obstacle avoidance control system 2 in that the obstacle operation prediction device 600 is provided.

In other respects, the obstacle avoidance control system 3 is similar to the obstacle avoidance control system 2. Description of similarities between the obstacle avoidance control system 3 and the obstacle avoidance control system 2 will be omitted and the reference signs shown in FIG. 2, the reference signs shown in FIG. 3, and the reference signs shown in FIG. 9 will be cited as necessary.

FIG. 12 is a schematic block diagram showing an example of the functional configuration of the obstacle operation prediction device 600. In the configuration shown in FIG. 12, the obstacle operation prediction device 600 includes a fourth communication unit 610, a fourth storage unit 680, and a fourth control unit 690. The fourth storage unit 680 includes a physical object operation information storage unit 681. The fourth control unit 690 includes a position prediction unit 691.

The fourth communication unit 610 communicates with other devices. In the obstacle avoidance control system 3, the obstacle position estimation device 500 transmits information indicating a type of obstacle identified by the type identification unit 591 and position information of the obstacle calculated by the position estimation unit 592 in association. The fourth communication unit 610 receives the information transmitted by the obstacle position estimation device 500. Also, the fourth communication unit 610 transmits information obtained by adding future position information of the obstacle predicted by the position prediction unit 691 to the information received from the obstacle position estimation device 500 to the obstacle avoidance control device 400.

The fourth storage unit 680 stores various types of data. A function of the fourth storage unit 680 is executed using the storage device provided in the obstacle operation prediction device 600.

The physical object operation information storage unit 681 stores physical object operation information. The physical object operation information storage unit 681 stores information in which type identification information for identifying the type of physical object and information for predicting an operation of the physical object are associated as the physical object operation information.

The physical object operation information storage unit 681 may be configured to store an operation model of the physical object as the physical object operation information. Alternatively, the physical object operation information storage unit 681 may be configured to store history information about a position of the physical object detected as an obstacle as the physical object operation information.

The fourth control unit 690 controls each unit of the obstacle operation prediction device 600 so that various types of processes are executed. A function of the fourth control unit 690 is executed by a CPU provided in the obstacle operation prediction device 600 reading a program from the fourth storage unit 680 and executing the program.

The position prediction unit 691 identifies a future position of a physical object serving as the obstacle. For example, the position prediction unit 691 reads information for predicting the operation of the physical object from the physical object operation information storage unit 681 using identification information of the type of physical object identified by the type identification unit 591 of the obstacle position estimation device 500. The position prediction unit 691 predicts a movement quantity of the physical object between control steps using the read information. The position prediction unit 691 predicts the position of the physical object in the next control step by adding the predicted movement quantity to the position of the physical object calculated by the position estimation unit 592 of the obstacle position estimation device 500.

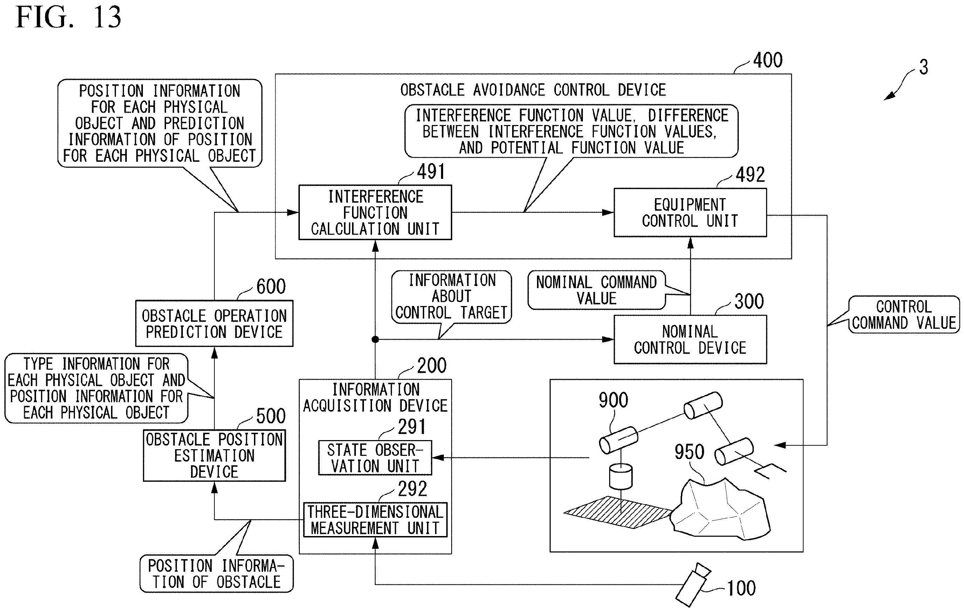

FIG. 13 is a diagram showing an example of a flow of data in the obstacle avoidance control system 3.

When FIG. 13 is compared with FIG. 10, the obstacle avoidance control system 3 of FIG. 13 is different from the obstacle avoidance control system 2 of FIG. 10 in that the obstacle operation prediction device 600 is provided. Due to the above difference, the obstacle position estimation device 500 transmits information to the obstacle avoidance control device 400 in FIG. 10, whereas the obstacle position estimation device 500 transmits information to the obstacle operation prediction device 600 and the obstacle operation prediction device 600 transmits the information to the obstacle avoidance control device 400 in FIG. 13.

In FIG. 13, the obstacle position estimation device 500 transmits information in which information indicating the type of physical object is associated with the position information of the physical object to the obstacle operation prediction device 600 for each physical object. The obstacle operation prediction device 600 transmits information in which the information indicating the type of physical object, the position information of the physical object, and the prediction information about the position of the physical object are associated to the obstacle avoidance control device 400 for each physical object. In the obstacle avoidance control device 400, the interference function calculation unit 491 calculates an interference function value, a difference between interference function values, and a potential function value using the information calculated by the state observation unit 291 of the information acquisition device 200 and the information from the obstacle operation prediction device 600.

In other respects, FIG. 13 is similar to the case of FIG. 10.

As described above, the obstacle operation prediction device 600 reads information based on the identified type from the physical object operation information indicating information about the movement of the physical object for each type of physical object and predicts a future position of the obstacle using the read information. The interference function calculation unit 491 of the obstacle avoidance control device 400 calculates a value indicating a change over time in the interference function value on the basis of the predicted future position of the obstacle.

The obstacle avoidance control system 3 can use information about the operation of the physical object, which is shown as a characteristic of the physical object that is the obstacle, in the prediction of the future position of the obstacle. In this regard, the future position of the obstacle can be predicted with relatively high accuracy. The obstacle avoidance control system 3 can perform obstacle avoidance of the control target equipment 900 with relatively high accuracy in that a result of predicting the future position of the obstacle is used for obstacle avoidance of the control target equipment 900.

<Fourth example embodiment>

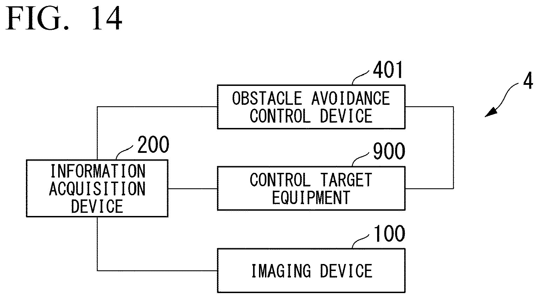

FIG. 14 is a schematic configuration diagram showing an example of a device configuration of an obstacle avoidance control system according to a fourth example embodiment. In the configuration shown in FIG. 14, the obstacle avoidance control system 4 includes an imaging device 100, an information acquisition device 200, and an obstacle avoidance control device 401. Also, the obstacle avoidance control system 2 controls control target equipment 900.

The obstacle avoidance control system 4 is different from the obstacle avoidance control device 400 in that no nominal control device 300 is provided and the obstacle avoidance control device 401 is provided instead of the obstacle avoidance control device 400. In the obstacle avoidance control device 401, one of the constraint conditions for use in a process of obtaining an avoidance command value includes a constraint condition for reflecting a target set in the control target equipment 900 in a control command value.

In other respects, the obstacle avoidance control system 4 is similar to the obstacle avoidance control system 1. Description of similarities between the obstacle avoidance control system 4 and the obstacle avoidance control system 1 will be omitted and the reference signs shown in FIG. 2 will be cited as necessary.

Although a case in which the fourth example embodiment is implemented on the basis of the first example embodiment will be described below as an example, the fourth example embodiment may be implemented on the basis of the second example embodiment or the third example embodiment. In particular, the obstacle avoidance control system 4 may include an obstacle position estimation device 500 according to the second example embodiment. The obstacle avoidance control system 4 may include the obstacle position estimation device 500 and the obstacle operation prediction device 600 according to the third example embodiment.

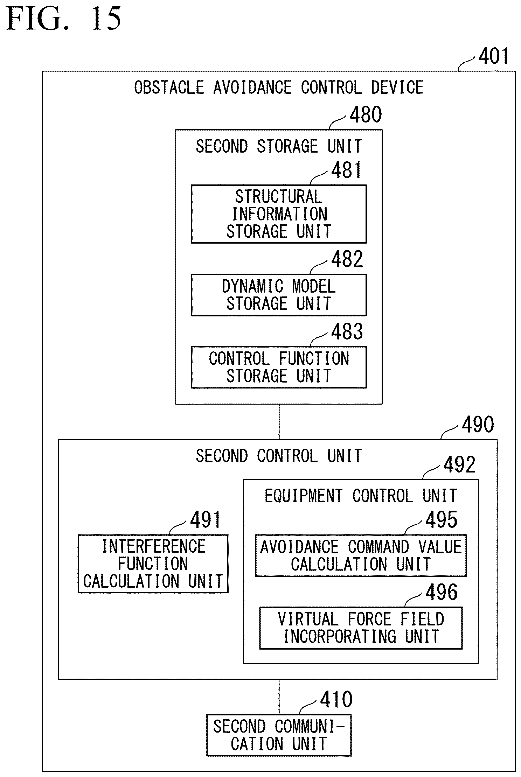

FIG. 15 is a schematic block diagram showing an example of a functional configuration of the obstacle avoidance control device 401. In the configuration shown in FIG. 15, the obstacle avoidance control device 401 includes a second communication unit 410, a second storage unit 480, and a second control unit 490. The second storage unit 480 includes a structural information storage unit 481, a dynamic model storage unit 482, and a control function storage unit 483. The second control unit 490 includes an interference function calculation unit 491 and an equipment control unit 492. The equipment control unit 492 includes an avoidance command value calculation unit 495 and a virtual force field incorporating unit 496.

The obstacle avoidance control device 401 is different from the obstacle avoidance control device 400 in that the second storage unit 480 includes the control function storage unit 483, and the equipment control unit 492 does not include the nominal command value acquisition unit 493 and the avoidance necessity determination unit 494. The above difference is due to a difference in a method of reflecting the target set in the control target equipment 900 in the control command value.

In the obstacle avoidance control device 400, the avoidance command value calculation unit 495 causes the target set in the control target equipment 900 to be reflected in the avoidance command value by approximating the avoidance command value to a nominal command value using an evaluation function. On the other hand, in the obstacle avoidance control device 401, one of the constraint conditions for use in the avoidance command value calculation unit 495 in the process of obtaining the avoidance command value includes a constraint condition for reflecting the target set in the control target equipment 900 in the control command value.

In other respects, the obstacle avoidance control device 401 is similar to the obstacle avoidance control device 400.

The constraint conditions in an optimization problem to be solved by the avoidance command value calculation unit 495 in the fourth example embodiment are expressed by three types of inequalities.

The first type of inequality among the three types of inequalities is an inequality showing a condition sufficient for the control target equipment 900 not to come into contact with an obstacle, as in the case of the first example embodiment. The first type of inequality among the three types of inequalities is shown as in, for example, the above-described Expression (3).

The second type of inequality among the three types of inequalities is an inequality representing a constraint condition that the control command value is set within a range of upper and lower limit values defined by the specifications of the movable part of the control target equipment 900 as in the case of the first example embodiment. The second type of inequality among the three types of inequalities is shown as in, for example, the above-described Expression (7).

On the other hand, the third type of inequality among the three types of inequalities represents a condition associated with a degree at which the target set in the control target equipment 900 is stably achieved by executing the control command.

For example, a Lyapunov function is denoted by V, a differential value of a Lyapunov function value between control steps is denoted by $\Delta V$, and the third type of inequality representing the constraint condition may be shown as in Expression (11).

[Math. 11]

$$\Delta V(x, u) \leq d \qquad \cdots (1\,1)$$

"d" is set to mitigate the constraint condition and easily obtain a solution.

When the solution is obtained with d=0, the solution is a control command value for strictly achieving the target set in the control target equipment 900. On the other hand, when d=0, there is a problem that the solution cannot be obtained because the solution is searched for with pinpoint accuracy.

Therefore, by setting d≥0, it is possible to allow a deviation between the operation result of the control target equipment 900 based on the control command value and the target and to expand a search range of the solution. Hereinafter, the deviation between the operation result of the control target equipment 900 and the target is referred to as an error. When a value of "d" is larger, an allowable error is larger and the solution is obtained more easily.

An example in which "d" is a variable with d≥0 will be described below. In this case, as will be described below, the evaluation function in the optimization problem may include the term for evaluating a magnitude of the value of "d."

The third type of inequality representing the constraint condition in the optimization problem to be solved by the avoidance command value calculation unit 495 in the fourth example embodiment is not limited to Expression (11) and can be various inequalities capable of adjusting a tradeoff between a degree of achievement of the target set in the control target equipment 900 and the ease of obtaining the solution.

For example, the third type of inequality indicating the constraint condition in the optimization problem to be solved by the avoidance command value calculation unit 495 in the fourth example embodiment may be shown as in Expression (12).

[Math. 12]

$$\Delta D(x, u) \leq d \qquad \cdots (1\,2)$$

A function D is a function for calculating the Euclidean distance between a target value and an actual value set in the control target equipment 900. Assuming that the target value set in the control target equipment 900 is indicated by a vector, the avoidance command value calculation unit 495 obtains a sum of squares of the differences between the target value and the actual value for all elements of the vector in the calculation of the function D and calculates a square root of the sum.

A function $\Delta D$ is a function for calculating a differential value between the control steps in the Euclidean distance between the target value set in the control target equipment 900 and the actual value. For example, a function value D(x) in a control step t is denoted by D(xt) and a function value D(x) in the control step t+1 is denoted by $D(x_{t+1})$. Also, a differential value $\Delta D(x, u)$ of the function value D(x) from the control step t to the control step t+1 is expressed as $\Delta D(x_t, u_t) = D(x_{t+i}) - D(x_t)$.

Expression (12) is a constraint inequality for mitigating the condition for guaranteeing the stability of the control target equipment 900. For example, if the avoidance command value calculation unit 495 obtains the control command u that satisfies $\Delta D(x, u) < 0$ all the time, the control target equipment 900 can stably achieve a target value.

An objective function in the optimization problem to be solved by the avoidance command value calculation unit 495 in the fourth example embodiment is shown as in, for example, Expression (13).
[Math. 13]

$$u^* = \underset{u}{\arg\min}(u^T u + p \cdot d^2) \qquad \cdots (13)$$

The term "$u^T u$" in Expression (13) indicates a square of the norm as a vector of the control command value u. The norm here is also referred to as the Euclidean norm or the Euclidean distance.

The item "$u^T u$" in Expression (13) is set to reduce a magnitude of the control command value as far as possible so that the control target equipment 900 does not perform an ineffective operation.

The term "$p \cdot d^2$" in Expression (13) is a term for evaluating the magnitude of "d" in Expression (11) or Expression (12). "p" in "$p \cdot d^2$" denotes a weight for adjusting the weighting of "$u^T u$" and "$d^2$." "p" is set, for example, as a constant of p>0.

When two solution candidates for the above optimization problem are detected, the candidate having a smaller value between the values of the "$p \cdot d^2$" terms is adopted as an optimum solution if the values of the "$u^T u$" terms of the two solution candidates are the same.

Expression (13) corresponds to an example of the evaluation function. The control command value u, which is a minimum solution in Expression (13), corresponds to an example of a control command value in which the evaluation value obtained by applying the control command value to the evaluation function satisfies a prescribed end condition.

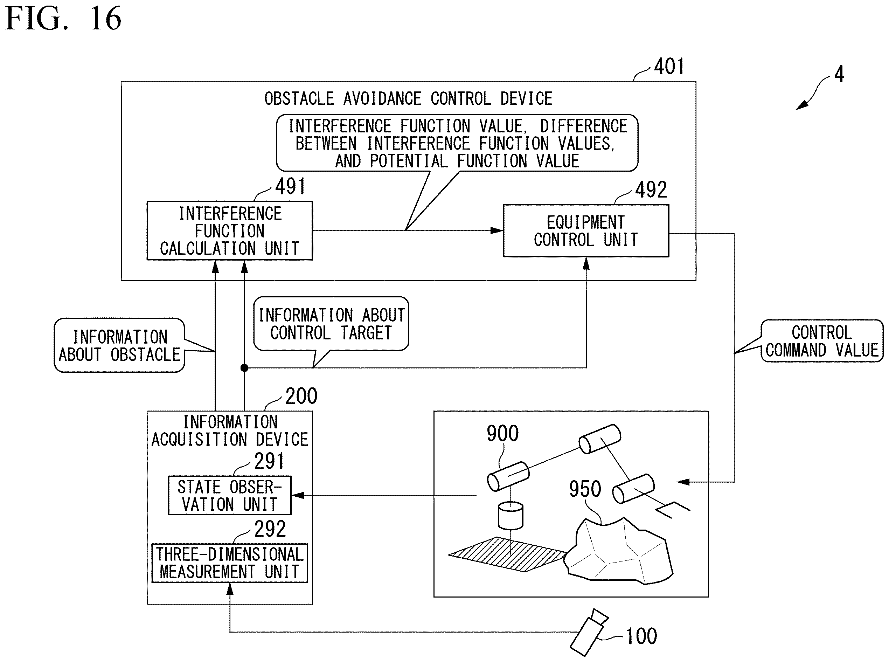

FIG. 16 is a diagram showing an example of a flow of data in the obstacle avoidance control system 4.

When FIG. 16 is compared with FIG. 4, the obstacle avoidance control system 4 does not include the nominal control device 300 in FIG. 16. According to this, in FIG. 16, a value associated with a control target from the information acquisition device 200 is input to the equipment control unit 492.

In other respects, FIG. 16 is similar to the case of FIG. 4.

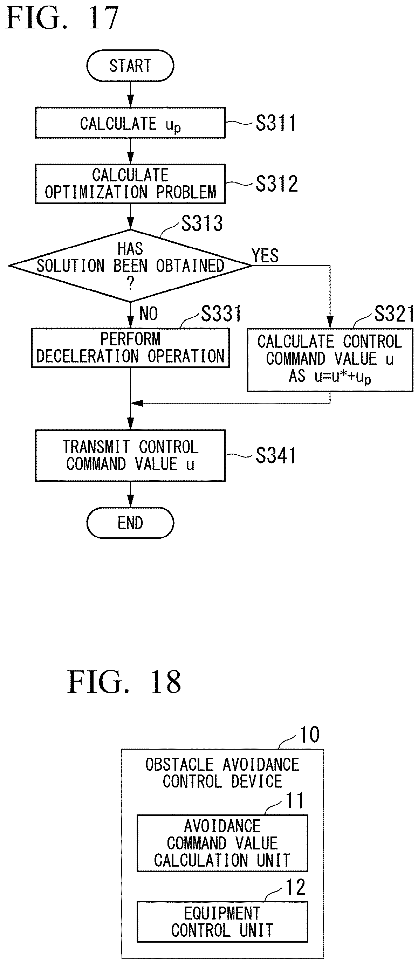

FIG. 17 is a flowchart showing an example of a processing procedure in which the obstacle avoidance control device 401 acquires a control command value for the control target equipment 900. The obstacle avoidance control device 401 performs the process of FIG. 17 for each control step of control for the control target equipment 900.

The processing of step S311 of FIG. 17 is similar to the processing of step S111 of FIG. 5.

After step S311 the avoidance command value calculation unit 495 attempts to acquire the control command value based on the calculation of the optimization problem described above (step S312).

The equipment control unit 492 determines whether or not the avoidance command value calculation unit 495 has obtained a solution to the optimization problem in step S312 (step S313).

When the equipment control unit 492 determines that the solution has been obtained (step S313: YES), the process proceeds to step S321. The processing of step S321 is similar to the processing of step S141 of FIG. 5. After step S321, the process proceeds to step S341. The processing of step S341 is similar to the processing of step S161 of FIG. 5. After step S341, the obstacle avoidance control device 401 ends the process of FIG. 17.

On the other hand, when the equipment control unit 492 determines that a solution has not been obtained in step S313 (step S313: NO), the process proceeds to step S3331. The processing of step S331 is similar to the processing of step S151 of FIG. 5. After step S331, the process proceeds to step S341.

As described above, as in the case of the obstacle avoidance control device 400, the obstacle avoidance control device 401 can also set a constraint condition for avoiding the contact between the control target equipment 900 and an obstacle. When a plurality of reference points for avoiding contact with the obstacle are set in the control target equipment 900, a constraint condition can be set for each reference point. In this way, according to the obstacle avoidance control device 401, it is possible to set a plurality of reference points for avoiding contact between the control target equipment 900 and the obstacle and control can be performed to avoid the obstacle with respect to various parts of the control target equipment 900.

Also, in the obstacle avoidance control device 401, a constraint condition can be set for each obstacle when there are a plurality of obstacles. In this regard, according to the obstacle avoidance control device 401, it is possible to deal with the obstacles relatively easily when there are a plurality of obstacles.

<Fifth example embodiment>

FIG. 18 is a diagram showing an example of a configuration of an obstacle avoidance control device according to a fifth example embodiment. An obstacle avoidance control device 10 shown in FIG. 18 includes an avoidance command value calculation unit 11 and a device control unit 12.

In the above configuration, the avoidance command value calculation unit 11 obtains an avoidance command value that is a control command value for control target equipment, the control command value which satisfies constraint conditions including a condition sufficient for the control target equipment not to come into contact with an obstacle, and the control command value that an evaluation value obtained by applying the control command value to an evaluation function satisfies a prescribed end condition. The device control unit 12 controls the control target equipment on the basis of a processing result of the avoidance command value calculation unit 11.

The obstacle avoidance control device 10 can set a constraint condition for avoiding contact between the control target equipment and the obstacle. When a plurality of reference points for avoiding contact between the control target equipment and the obstacle are set in the control target, a constraint condition can be set for each reference point. In this way, in the obstacle avoidance control device 10, the reference point for avoiding the obstacle with respect to the control target equipment is not limited to one place and control can be performed to avoid obstacles with respect to various parts of the control target equipment.

Also, in the obstacle avoidance control device 10, a constraint condition can be set for each obstacle when there are a plurality of obstacles. In this regard, according to the obstacle avoidance control device 10, it is possible to deal with the obstacles relatively easily when there are a plurality of obstacles.

<Sixth example embodiment>

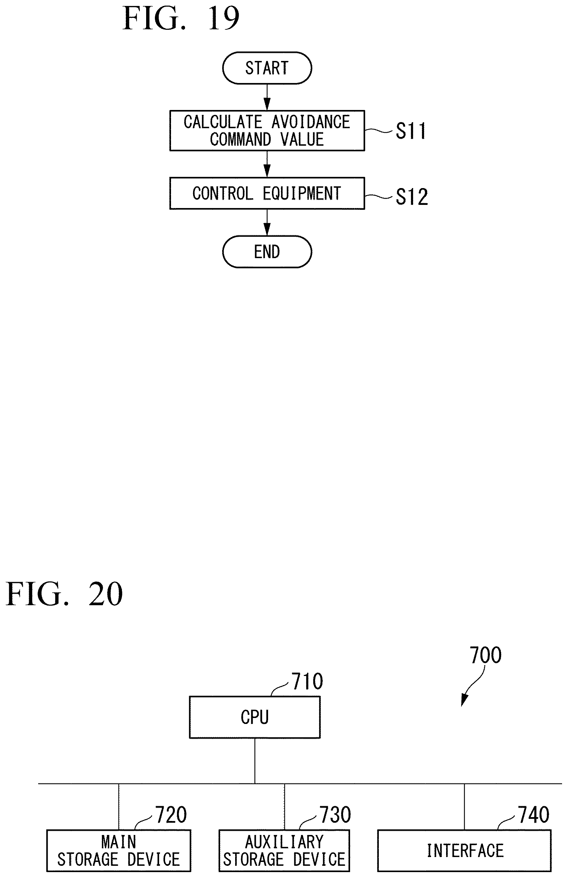

FIG. 19 is a diagram showing an example of a processing procedure in an obstacle avoidance control method according to a sixth example embodiment. The obstacle avoidance control method shown in FIG. 19 includes a process (step S11) of obtaining an avoidance command value that is a control command value for control target equipment, the control command value which satisfies constraint conditions including a condition sufficient for the control target equipment not to come into contact with an obstacle, and the control command value that an evaluation value obtained by applying the control command value to an evaluation function satisfies a prescribed end condition; and a process (step S12) of controlling the control target equipment on the basis of a processing result in step S11.

In this obstacle avoidance control method, it is possible to set a constraint condition for avoiding contact between the control target equipment and the obstacle. When a plurality of reference points for avoiding contact between the control target equipment and the obstacle are set in the control target, a constraint condition can be set for each reference point. In this way, in the obstacle avoidance control device 10, the reference point for avoiding the obstacle with respect to the control target equipment is not limited to one place and control can be performed to avoid obstacles with respect to various parts of the control target equipment.

FIG. 20 is a schematic block diagram showing a configuration of a computer according to at least one example embodiment.

In the configuration shown in FIG. 20, the computer 700 includes a CPU 710, a main storage device 720, an auxiliary storage device 730, and an interface 740.

Any one or more of the information acquisition device 200, the nominal control device 300, the obstacle avoidance control device 400, the obstacle avoidance control device 401, the obstacle position estimation device 500, and the obstacle operation prediction device 600 described above may be implemented in the computer 700. In this case, the operation of each of the above-described processing units is stored in the auxiliary storage device 730 in the form of a program. The CPU 710 reads the program from the auxiliary storage device 730, loads the program into the main storage device 720, and executes the above-described process in accordance with the program. Also, the CPU 710 secures a storage area corresponding to each of the above-described storage units in the main storage device 720 in accordance with the program. Communication between each device and other devices is executed when the interface 740 has a communication function and communication is performed in accordance with the control of the CPU 710.

When the information acquisition device 200 is implemented in the computer 700, the operations of the first control unit 290 and each unit thereof are stored in the auxiliary storage device 730 in the form of a program. The CPU 710 reads the program from the auxiliary storage device 730, loads the program into the main storage device 720, and executes the above-described process in accordance with the program.

Also, the CPU 710 secures a storage area corresponding to the first storage unit 280 in the main storage device 720 in accordance with the program. Communication to be performed by the first communication unit 210 is executed when the interface 740 has a communication function and communication is performed in accordance with the control of the CPU 710.

When the obstacle avoidance control device 400 is implemented in the computer 700, the operations of the second control unit 490 and each unit thereof are stored in the auxiliary storage device 730 in the form of a program. The CPU 710 reads the program from the auxiliary storage device 730, loads the program into the main storage device 720, and executes the above-described process in accordance with the program.

Also, the CPU 710 secures the second storage unit 480 and the storage area corresponding to each unit in the main storage device 720 in accordance with the program. Communication to be performed by the second communication unit 410 is executed when the interface 740 has a communication function and communication is performed in accordance with the control of the CPU 710.

When the obstacle avoidance control device 401 is implemented in the computer 700, the operations of the second control unit 490 and each unit thereof are stored in the auxiliary storage device 730 in the form of a program. The CPU 710 reads the program from the auxiliary storage device 730, loads the program into the main storage device 720, and executes the above-described process in accordance with the program.

Also, the CPU 710 secures the second storage unit 480 and the storage area corresponding to each unit in the main storage device 720 in accordance with the program. Communication to be performed by the second communication unit 410 is executed when the interface 740 has a communication function and communication is performed in accordance with the control of the CPU 710.

When the obstacle position estimation device 500 is implemented in the computer 700, the operations of the third control unit 590 and each unit thereof are stored in the auxiliary storage device 730 in the form of a program. The CPU 710 reads the program from the auxiliary storage device 730, loads the program into the main storage device 720, and executes the above-described process in accordance with the program.

Also, the CPU 710 secures the third storage unit 580 and the storage area corresponding to each unit in the main storage device 720 in accordance with the program. Communication to be performed by the third communication unit 510 is executed when the interface 740 has a communication function and communication is performed in accordance with the control of the CPU 710.

When the obstacle operation prediction device 600 is implemented in the computer 700, the operations of the fourth control unit 690 and each unit thereof are stored in the auxiliary storage device 730 in the form of a program. The CPU 710 reads the program from the auxiliary storage device 730, loads the program into the main storage device 720, and executes the above process in accordance with the program.

Also, the CPU 710 secures the fourth storage unit 680 and the storage area corresponding to each unit in the main storage device 720 in accordance with the program. Communication to be performed by the fourth communication unit 610 is executed when the interface 740 has a communication function and communication is performed in accordance with the control of the CPU 710.

Also, a process of each unit may be performed by recording a program for implementing all or some functions of the information acquisition device 200, the nominal control device 300, the obstacle avoidance control device 400, the obstacle avoidance control device 401, the obstacle position estimation device 500, and the obstacle operation prediction device 600 on a computer-readable recording medium and causing a computer system to read and execute the program recorded on the recording medium. The "computer system" described here includes an operating system (OS) and hardware such as peripheral devices.

The "computer-readable recording medium" refers to a flexible disk, a magneto-optical disc, a read only memory (ROM), a portable medium such as a compact disc (CD)-ROM, or a storage device such as a hard disk embedded in the computer system. Also, the above-described program may be a program for implementing some of the above-described functions. Further, the above-described program may be capable of implementing the above-described function in combination with a program already recorded on the computer system.

Although example embodiments of the present invention have been described above with reference to the drawings, specific configurations are not limited to the example embodiments and a change in design and the like may also be included without departing from the scope of the present invention.

INDUSTRIAL APPLICABILITY

The example embodiments of the present invention may be applied to an obstacle avoidance control device, an obstacle avoidance control system, an obstacle avoidance control method, and a recording medium.

Reference Symbols

| | |
|---|---|
| 1, 2, 3, 4 | Obstacle avoidance control system |
| 10, 400, 401 | Obstacle avoidance control device |
| 11, 495 | Avoidance command value calculation unit |
| 12, 492 | Equipment control unit |
| 100 | Imaging device |
| 200 | Information acquisition device |
| 210 | First communication unit |
| 280 | First storage unit |
| 290 | First control unit |
| 291 | State observation unit |
| 292 | Three-dimensional measurement unit |

| | |
|---|---|
| 300 | Nominal control device |
| 410 | Second communication unit |
| 480 | Second storage unit |
| 481 | Structural information storage unit |
| 482 | Dynamic model storage unit |
| 483 | Control function storage unit |
| 490 | Second control unit |
| 491 | Interference function calculation unit |
| 493 | Nominal command value acquisition unit |
| 494 | Avoidance necessity determination unit |
| 496 | Virtual force field incorporating unit |
| 500 | Obstacle position estimation device |
| 510 | Third communication unit |
| 580 | Third storage unit |
| 581 | Physical object information storage unit |
| 590 | Third control unit |
| 591 | Type identification unit |
| 592 | Position estimation unit |
| 600 | Obstacle operation prediction device |
| 610 | Fourth communication unit |
| 680 | Fourth storage unit |
| 681 | Physical object operation information storage unit |
| 690 | Fourth control unit |
| 691 | Position prediction unit |

**Claims**

1.  An obstacle avoidance control device comprising:

    an avoidance command value calculation unit that obtains an avoidance command value that is a control command value for control target equipment, the control command value which satisfies constraint conditions including a condition sufficient for the control target equipment not to come into contact with an obstacle, and the control command value that an evaluation value obtained by applying the control command value to an evaluation function satisfies a prescribed end condition; and
    an equipment control unit that controls the control target equipment on the basis of a processing result of the avoidance command value calculation unit.

2.  The obstacle avoidance control device according to claim 1, further comprising a nominal command value acquisition unit that acquires a nominal command value that is a control command value when obstacle avoidance by the control target equipment is not taken into account,

    wherein the avoidance command value calculation unit obtains the avoidance command value using the end condition that a degree of a difference between the obtained control command value and the nominal command value satisfies a prescribed condition, and
    wherein the equipment control unit controls the control target equipment on the basis of either one of the nominal command value and the processing result of the avoidance command value calculation unit.

3.  The obstacle avoidance control device according to claim 2, further comprising a virtual force field incorporating unit that reflects an operation in which the control target equipment moves farther away from the obstacle when the control target equipment is closer to the obstacle in at least one of the nominal command value and the avoidance command value,
    wherein the equipment control unit controls the control target equipment on the basis of either one of the nominal command value in which the operation is reflected and the avoidance command value in which the operation is reflected.

4.  The obstacle avoidance control device according to any one of claims 1 to 3, further comprising an interference function calculation unit that calculates an interference function value indicating a value based on a positional relationship between the control target equipment and the obstacle and a value indicating a change over time in the interference function value,
wherein the avoidance command value calculation unit obtains the avoidance command value using the interference function value and the value indicating the change over time in the interference function value.

5. The obstacle avoidance control device according to any one of claims 1 to 4, further comprising an avoidance necessity determination unit that determines whether or not a process of acquiring the avoidance command value is necessary on the basis of the positional relationship between the control target equipment and the obstacle, wherein the avoidance command value calculation unit obtains the avoidance command value when the avoidance necessity determination unit determines that the process of acquiring the avoidance command value is necessary.

6. The obstacle avoidance control device according to any one of claims 1 to 5, wherein, when the avoidance command value calculation unit determines that acquisition of the avoidance command value has failed, the equipment control unit decelerates the control target equipment.

7. The obstacle avoidance control device according to any one of claims 1 to 6, wherein the avoidance command value calculation unit obtains the avoidance command value that satisfies the condition sufficient for a reference point not to come into contact with the obstacle for each reference point set in the control target equipment.

8. The obstacle avoidance control device according to any one of claims 1 to 7, wherein the avoidance command value calculation unit obtains the avoidance command value that satisfies the condition sufficient for the control target equipment not to come into contact with the obstacle for each obstacle.

9. The obstacle avoidance control device according to any one of claims 1 to 6, wherein the avoidance command value calculation unit obtains the avoidance command value that satisfies the condition sufficient for the control target equipment not to come into contact with the obstacle, the avoidance command value being determined on the basis of a distance between the control target equipment and the obstacle at a position where the control target equipment is closest to the obstacle.

10. An obstacle avoidance control system further comprising:

the obstacle avoidance control device according to claim 4;
a type identification unit that identifies a type of physical object serving as the obstacle; and
a position estimation unit that reads information based on the identified type from physical object information indicating a size and a shape of the physical object for each type of physical object and estimate a position of the physical object using the read information,
wherein the interference function calculation unit calculates the interference function value and the value indicating the change over time in the interference function value on the basis of the estimated position of the physical object.

11. The obstacle avoidance control system according to claim 10, further comprising a position prediction unit that reads information based on the identified type from physical object operation information indicating information about a movement of the physical object for each type of physical object and predict a future position of the obstacle using the read information,
wherein the interference function calculation unit calculates the value indicating the change over time in the interference function value on the basis of the predicted future position of the obstacle.

12. An obstacle avoidance control method comprising:

a process of obtaining an avoidance command value that is a control command value for control target equipment, the control command value which satisfies constraint conditions including a condition sufficient for the control target equipment not to come into contact with an obstacle, and the control command value that an evaluation value obtained by applying the control command value to an evaluation function satisfies a prescribed end condition; and
a process of controlling the control target equipment on the basis of a processing result in the process of obtaining the avoidance command value.

13. A recording medium recording a program for causing a computer to execute:

a process of obtaining an avoidance command value that is a control command value for control target equipment, the control command value which satisfies constraint conditions including a condition sufficient for the control target equipment not to come into contact with an obstacle, and the control command value that an evaluation value obtained by applying the control command value to an evaluation function satisfies a prescribed end condition; and
a process of controlling the control target equipment on the basis of a processing result in the process of obtaining the avoidance command value.

# FIG. 1

```
                                    ┌─400
                        ┌──────────────────────┐
                        │ OBSTACLE AVOIDANCE   │        ┌─1
                        │ CONTROL DEVICE       │
                        └──────────────────────┘
                                    │      ┌─300
                        ┌──────────────────────┐
                        │ NOMINAL              │
                        │ CONTROL DEVICE       │
                        └──────────────────────┘
          ┌─200
┌──────────────────┐    ┌──────────────────────┐  ┌─900
│ INFORMATION      │    │ CONTROL TARGET       │
│ ACQUISITION      │    │ EQUIPMENT            │
│ DEVICE           │    └──────────────────────┘
└──────────────────┘
                        ┌──────────────────────┐  ┌─100
                        │ IMAGING DEVICE       │
                        └──────────────────────┘
```

# FIG. 2

```
                        ┌─200
┌──────────────────────────────────┐
│ INFORMATION                      │
│ ACQUISITION DEVICE               │
│                        ┌─280     │
│  ┌──────────────────────────┐    │
│  │ FIRST                    │    │
│  │ STORAGE UNIT             │    │
│  └──────────────────────────┘    │
│                        ┌─290     │
│  ┌──────────────────────────┐    │
│  │ FIRST CONTROL UNIT       │    │
│  │              ┌─291        │    │
│  │  ┌────────────────────┐  │    │
│  │  │ STATE OBSER-       │  │    │
│  │  │ VATION UNIT        │  │    │
│  │  └────────────────────┘  │    │
│  │              ┌─292        │    │
│  │  ┌────────────────────┐  │    │
│  │  │ THREE-DIMENSIONAL  │  │    │
│  │  │ MEASUREMENT UNIT   │  │    │
│  │  └────────────────────┘  │    │
│  └──────────────────────────┘    │
│                        ┌─210     │
│  ┌──────────────────────────┐    │
│  │ FIRST COMMUNI-           │    │
│  │ CATION UNIT              │    │
│  └──────────────────────────┘    │
└──────────────────────────────────┘
```

27

# FIG. 3

OBSTACLE AVOIDANCE CONTROL DEVICE — 400

SECOND STORAGE UNIT — 480

STRUCTURAL INFORMATION STORAGE UNIT — 481

DYNAMIC MODEL STORAGE UNIT — 482

SECOND CONTROL UNIT — 490

EQUIPMENT CONTROL UNIT — 492

INTERFERENCE FUNCTION CALCULATION UNIT — 491

NOMINAL COMMAND VALUE ACQUISITION UNIT — 493

AVOIDANCE NECESSITY DETERMINATION UNIT — 494

AVOIDANCE COMMAND VALUE CALCULATION UNIT — 495

VIRTUAL FORCE FIELD INCORPORATING UNIT — 496

SECOND COMMUNICATION UNIT — 410

FIG. 4

**OBSTACLE AVOIDANCE CONTROL DEVICE** (400)

INTERFERENCE FUNCTION VALUE, DIFFERENCE BETWEEN INTERFERENCE FUNCTION VALUES, AND POTENTIAL FUNCTION VALUE

INTERFERENCE FUNCTION CALCULATION UNIT (491)

EQUIPMENT CONTROL UNIT (492)

INFORMATION ABOUT OBSTACLE

INFORMATION ABOUT CONTROL TARGET

NOMINAL COMMAND VALUE

NOMINAL CONTROL DEVICE (300)

CONTROL COMMAND VALUE

INFORMATION ACQUISITION DEVICE (200)

STATE OBSERVATION UNIT (291)

THREE-DIMENSIONAL MEASUREMENT UNIT (292)

900

950

100

1

FIG. 5

```
              ┌─────────┐
              │  START  │
              └────┬────┘
                   │
         ┌─────────▼──────────┐
         │   CALCULATE u_p    │───S111
         └─────────┬──────────┘
                   │
                  ╱│╲  S112
                 ╱ │ ╲          YES
                ╱  │  ╲──────────────────────────┐
               ◄ B(x)>α? ►                       │         S121
                ╲     ╱                ┌──────────▼──────────┐
                 ╲   ╱                 │ CALCULATE CONTROL   │
                  ╲ │ NO               │ COMMAND VALUE u     │
         ┌─────────▼──────────┐        │ AS u=u_r+u_p        │
         │     CALCULATE       │       └──────────┬──────────┘
         │ OPTIMIZATION PROBLEM│──S131            │
         └─────────┬──────────┘                   │
                   │                              │
                  ╱│╲  S132                       │
                 ╱ │ ╲          YES               │
                ╱  │  ╲──────────────┐            │
               ◄    HAS    ►          │   S141     │
           ◄SOLUTION BEEN OBTAINED►   │            │
               ◄    ?     ►  ┌────────▼─────────┐  │
                ╲     ╱      │ CALCULATE CONTROL│  │
                 ╲   ╱       │ COMMAND VALUE u  │  │
                  ╲ │ NO     │ AS u=u*+u_p      │  │
         ┌─────────▼──────────┐ └──────┬───────┘  │
         │     PERFORM         │         │          │
         │ DECELERATION OPERATION│─S151  │          │
         └─────────┬──────────┘         │          │
                   │◄───────────────────┴──────────┘
                   │
         ┌─────────▼──────────┐
         │  TRANSMIT CONTROL   │──S161
         │  COMMAND VALUE u    │
         └─────────┬──────────┘
                   │
              ┌────▼────┐
              │   END   │
              └─────────┘
```

# FIG. 6

```
           ( START )
               │
               ▼
┌─────────────────────────────────┐
│    CALCULATE SPACE OCCUPIED      │ ─── S211
│   BY CONTROL TARGET EQUIPMENT    │
└─────────────────────────────────┘
               │
               ▼
┌─────────────────────────────────┐
│  ACQUIRE POSITION INFORMATION OF │
│ OBSTACLE IN COORDINATE SYSTEM OF │ ─── S212
│     CONTROL TARGET EQUIPMENT     │
└─────────────────────────────────┘
               │
               ▼
┌─────────────────────────────────┐
│          CALCULATE B(x)          │ ─── S213
└─────────────────────────────────┘
               │
               ▼
┌─┬─────────────────────────────┬─┐
│ │      CALCULATE ΔB(x, u)      │ │ ─── S214
└─┴─────────────────────────────┴─┘
               │
               ▼
           (  END  )
```

# FIG. 7

```
              ( START )
                  │
                  ▼
              ╱───────╲  ─── S221
            ╱    CAN    ╲
          ╱   ΔB(x, u) BE  ╲    YES
        ◁ CALCULATED IN CALCULATION OF ▷─────┐
          ╲  DYNAMIC MODEL ╱                 │
            ╲     ?      ╱                    │
              ╲───────╱                       │
                  │ NO  ─── S241              │ ─── S231
                  ▼                           ▼
┌──────────────────────────┐   ┌──────────────────────────┐
│    CALCULATE ΔB(x, u)     │   │    CALCULATE ΔB(x, u)     │
│      USING MINUTE         │   │     IN CALCULATION OF     │
│       CHANGE IN u         │   │      DYNAMIC MODEL        │
└──────────────────────────┘   └──────────────────────────┘
                  │                           │
                  ▼◄──────────────────────────┘
              (  END  )
```

FIG. 8

```
                                          ┌─400
                            ┌──────────────────────────┐         ╱2
                            │  OBSTACLE AVOIDANCE       │   ◄─
                            │  CONTROL DEVICE           │
           ┌─500           └──────────────────────────┘
  ┌──────────────────────┐       │        ┌─300
  │ OBSTACLE POSITION    │   ┌────────────────────┐
  │ ESTIMATION DEVICE    │   │    NOMINAL         │
  └──────────────────────┘   │ CONTROL DEVICE     │
                            └────────────────────┘
              ┌─200                      ┌─900
  ┌──────────────────────┐   ┌────────────────────┐
  │   INFORMATION        │   │  CONTROL TARGET    │
  │ ACQUISITION DEVICE   │   │   EQUIPMENT        │
  └──────────────────────┘   └────────────────────┘
                                         ┌─100
                            ┌────────────────────┐
                            │   IMAGING DEVICE   │
                            └────────────────────┘
```

FIG. 9

```
                          ┌─500
        ┌────────────────────────────────────┐
        │    OBSTACLE POSITION               │
        │    ESTIMATION DEVICE               │
        │                      ┌─580         │
        │  ┌──────────────────────────────┐  │
        │  │  THIRD STORAGE UNIT          │  │
        │  │                  ┌─581       │  │
        │  │  ┌────────────────────────┐  │  │
        │  │  │ PHYSICAL OBJECT        │  │  │
        │  │  │ INFORMATION            │  │  │
        │  │  │ STORAGE UNIT           │  │  │
        │  │  └────────────────────────┘  │  │
        │  └──────────────────────────────┘  │
        │                      ┌─590         │
        │  ┌──────────────────────────────┐  │
        │  │  THIRD CONTROL UNIT          │  │
        │  │                  ┌─591       │  │
        │  │  ┌────────────────────────┐  │  │
        │  │  │    TYPE                │  │  │
        │  │  │ IDENTIFICATION UNIT    │  │  │
        │  │  └────────────────────────┘  │  │
        │  │                  ┌─592       │  │
        │  │  ┌────────────────────────┐  │  │
        │  │  │   POSITION             │  │  │
        │  │  │ ESTIMATION UNIT        │  │  │
        │  │  └────────────────────────┘  │  │
        │  └──────────────────────────────┘  │
        │                      ┌─510         │
        │  ┌──────────────────────────────┐  │
        │  │    THIRD                     │  │
        │  │ COMMUNICATION UNIT           │  │
        │  └──────────────────────────────┘  │
        └────────────────────────────────────┘
```

# FIG. 10

EP 3 920 001 A1

FIG. 11

OBSTACLE OPERATION
PREDICTION DEVICE /600

OBSTACLE POSITION
ESTIMATION DEVICE /500

OBSTACLE AVOIDANCE
CONTROL DEVICE /400

NOMINAL
CONTROL DEVICE /300

INFORMATION
ACQUISITION DEVICE /200

CONTROL TARGET
EQUIPMENT /900

IMAGING DEVICE /100

3

FIG. 12

OBSTACLE OPERATION
PREDICTION DEVICE /600

FOURTH STORAGE UNIT /680

PHYSICAL OBJECT
OPERATION INFORMATION
STORAGE UNIT /681

FOURTH CONTROL UNIT /690

POSITION
PREDICTION UNIT /691

FOURTH
COMMUNICATION UNIT /610

FIG. 13

EP 3 920 001 A1

FIG. 14

```
                                    ┌─────────────────────┐ 401
                                    │ OBSTACLE AVOIDANCE  │
                              ┌─────│  CONTROL DEVICE     │──────┐        4
                              │     └─────────────────────┘      │
                    200       │                                  │
  ┌──────────────┐            │     ┌─────────────────────┐ 900  │
  │ INFORMATION  │────────────┘     │  CONTROL TARGET     │──────┘
  │ ACQUISITION  │──────────────────│   EQUIPMENT         │
  │   DEVICE     │                  └─────────────────────┘
  └──────────────┘                  ┌─────────────────────┐ 100
           │                        │   IMAGING DEVICE    │
           └────────────────────────│                     │
                                    └─────────────────────┘
```

# FIG. 15

OBSTACLE AVOIDANCE CONTROL DEVICE 401

SECOND STORAGE UNIT 480

STRUCTURAL INFORMATION STORAGE UNIT 481

DYNAMIC MODEL STORAGE UNIT 482

CONTROL FUNCTION STORAGE UNIT 483

SECOND CONTROL UNIT 490

EQUIPMENT CONTROL UNIT 492

INTERFERENCE FUNCTION CALCULATION UNIT 491

AVOIDANCE COMMAND VALUE CALCULATION UNIT 495

VIRTUAL FORCE FIELD INCORPORATING UNIT 496

SECOND COMMUNI-CATION UNIT 410

FIG. 16

## FIG. 17

```
         ┌─────────┐
         │  START  │
         └─────────┘
              │
              ▼
   ┌──────────────────────┐
   │   CALCULATE $u_p$     │────── S311
   └──────────────────────┘
              │
              ▼
   ┌──────────────────────┐
   │      CALCULATE       │────── S312
   │ OPTIMIZATION PROBLEM │
   └──────────────────────┘
              │
              ▼          S313
          ╱────────────╲
         ╱     HAS       ╲    YES
         ╲ SOLUTION BEEN ╱─────────────┐
          ╲  OBTAINED   ╱              │
           ╲    ?     ╱                │
             ╲──────╱                  │
              │ NO      S331       S321│
              ▼                        ▼
   ┌──────────────────────┐  ┌──────────────────────┐
   │      PERFORM         │  │  CALCULATE CONTROL   │
   │ DECELERATION OPERATION│  │ COMMAND VALUE u      │
   └──────────────────────┘  │   AS $u = u* + u_p$  │
              │              └──────────────────────┘
              │                        │
              ◄────────────────────────┘
              ▼
   ┌──────────────────────┐
   │  TRANSMIT CONTROL    │────── S341
   │  COMMAND VALUE u     │
   └──────────────────────┘
              │
              ▼
         ┌─────────┐
         │   END   │
         └─────────┘
```

## FIG. 18

```
┌──────────────────────────────────┐
│                              ⌐10  │
│    OBSTACLE AVOIDANCE             │
│      CONTROL DEVICE               │
│                          ⌐11      │
│  ┌────────────────────────────┐   │
│  │      AVOIDANCE             │   │
│  │   COMMAND VALUE            │   │
│  │  CALCULATION UNIT          │   │
│  └────────────────────────────┘   │
│                          ⌐12      │
│  ┌────────────────────────────┐   │
│  │     EQUIPMENT              │   │
│  │    CONTROL UNIT            │   │
│  └────────────────────────────┘   │
└──────────────────────────────────┘
```

## FIG. 19

```
        ┌─────────┐
        │  START  │
        └─────────┘
             │
             ▼
   ┌──────────────────────┐
   │ CALCULATE AVOIDANCE  │── S11
   │   COMMAND VALUE      │
   └──────────────────────┘
             │
             ▼
   ┌──────────────────────┐
   │  CONTROL EQUIPMENT   │── S12
   └──────────────────────┘
             │
             ▼
        ┌─────────┐
        │   END   │
        └─────────┘
```

## FIG. 20

700

```
              ┌───────────┐
              │    CPU    │── 710
              └───────────┘
                    │
   ┌────────────────┼────────────────────┐
   │                │                    │
┌──────────┐  ┌──────────────┐   ┌──────────────┐
│  MAIN    │  │  AUXILIARY   │   │  INTERFACE   │
│ STORAGE  │  │  STORAGE     │   │              │
│ DEVICE   │  │  DEVICE      │   │              │
└──────────┘  └──────────────┘   └──────────────┘
   720            730                740
```

<div align="center">

**INTERNATIONAL SEARCH REPORT**

</div>

| | International application No. |
|---|---|
| | PCT/JP2019/003177 |

**A. CLASSIFICATION OF SUBJECT MATTER**

Int. Cl. G05D1/02(2006.01)i, G05B19/4155(2006.01)i, B25J9/10(2006.01)i, B25J13/00(2006.01)i

According to International Patent Classification (IPC) or to both national classification and IPC

**B. FIELDS SEARCHED**

Minimum documentation searched (classification system followed by classification symbols)
Int. Cl. G05D1/00-3/20, G05B19/4155-19/416, B25J9/10-9/22, 13/00

Documentation searched other than minimum documentation to the extent that such documents are included in the fields searched
Published examined utility model applications of Japan    1922-1996
Published unexamined utility model applications of Japan    1971-2019
Registered utility model specifications of Japan    1996-2019
Published registered utility model applications of Japan    1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-190241 A (OMRON CORP.) 29 November 2018, | 1-2, 6, 12-13 |
| Y | paragraphs [0023]-[0059], [0091]-[0108], fig. 1-4, | 3, 5, 7-9 |
| A | 14-17 & US 2018/0330200 A1, paragraphs [0044]-[0081], [0113]-[0130], fig. 1-4, 14-17 & EP 3401847 A1 & CN 108873768 A | 4, 10-11 |
| Y | JP 2012-11498 A (TOSHIBA CORP.) 19 January 2012, paragraphs [0016], [0023], [0027] (Family: none) | 3, 7-9 |
| Y | JP 2012-11494 A (YASKAWA ELECTRIC CORP.) 19 January 2012, paragraph [0036] (Family: none) | 5 |
| A | JP 2018-167333 A (SEIKO EPSON CORP.) 01 November 2018, abstract (Family: none) | 1, 12-13 |

☐ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 23.04.2019 | 14.05.2019 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018167333 A